# EUROPEAN PATENT APPLICATION

(11) **EP 4 834 617 A1**
(43) Date of publication of application: **04.11.2026**
(21) Application number: 24912118.7
(22) Date of filing: 21.11.2024
(51) Int. Cl.: B60K 1/04, B60K 11/04

(54) **ELECTRIC TRACTOR**

(30) Priority: 27.12.2023 JP 2023221274; 27.12.2023 JP 2023221276; 27.12.2023 JP 2023221316
(71) Applicant: Kubota Corporation, Osaka 556-8601 (JP)
(72) Inventor: SAKUMA Tetsushi, Sakai-shi, Osaka 590-0908 (JP); SERA Takashi, Sakai-shi, Osaka 590-0908 (JP); MATSUBARA Tomoyuki, Sakai-shi, Osaka 590-0908 (JP); MATSUMOTO Gen, Sakai-shi, Osaka 590-0908 (JP); FUJIWARA Takashi, Sakai-shi, Osaka 590-0908 (JP); TAKASE Shunya, Sakai-shi, Osaka 590-0908 (JP); MATSUMOTO Ryunosuke, Sakai-shi, Osaka 590-0908 (JP); MORISHITA Taiju, Sakai-shi, Osaka 590-0908 (JP); KUNIKATA Masaki, Sakai-shi, Osaka 590-0908 (JP); SATO Takanori, Sakai-shi, Osaka 590-0908 (JP)
(74) Representative: Müller-Boré & Partner Patentanwälte PartG mbB
(86) International application number: PCT/JP2024/041306
(87) International publication number: WO 2025/142225

(57) **Abstract**

An electric tractor includes: a battery (10); a motor configured to perform driving with use of electric power supplied from the battery (10); a travel device configured to be driven by the motor; and a support mechanism (W) including a first support (S1) and a second support (S2). The first support (S1) supports the battery (10), and the second support (S2) supports an electrical component (N).

## Description

### Technical Field

The present invention relates to an electric tractor.

### Background Art

[1] A work vehicle described in Patent Document 1 (referred to as a "tractor" in Patent Document 1) includes an engine and travel devices (referred to as "front wheels" and "rear wheels" in Patent Document 1) driven by the engine. The engine is housed in a hood (referred to as an "engine hood" in

### Patent Document 1).

[2] For example, an electric tractor disclosed in JP 2014-143965A (Patent Document 2) includes a battery, a first electric motor for travel (referred to as a "travel system electric motor (7)" in the document), and a second electric motor for at least either work or hydraulic drive (referred to as an "electric motor (6)" in the document).

### Prior Art Documents

### Patent Documents

Patent Document 1: JP 2018-69926A
Patent Document 2: JP 2014-143965A

### Disclosure of the Invention

### Problem to be Solved by the Invention

[1] A problem corresponding to background art [1] is as follows.

It is conceivable that the work vehicle described in Patent Document 1 includes a battery and a motor instead of the engine. This configuration enables the work vehicle to travel without emitting exhaust gas.

Furthermore, in this configuration, it is conceivable to dispose a battery and electrical components (e.g., a voltage converter) inside the hood.

However, in this case, it is likely that a member for supporting the battery and members for supporting the electrical components also need to be disposed inside the hood. As a result, it is likely to be difficult to mount a battery having a relatively large size. Consequently, the capacity of the battery that can be mounted is likely to be relatively small.

An object of the present invention is to provide an electric tractor in which a battery having a relatively large capacity is mounted.

[2] Another problem corresponding to background art [1] is as follows.

It is conceivable that the work vehicle described in Patent Document 1 includes a battery and a motor instead of the engine. This configuration enables the work vehicle to travel without emitting exhaust gas.

In addition, it is conceivable to mount various electrical components (e.g., a voltage converter) in this configuration. In Patent Document 1, the arrangement of the electrical components is not described.

An object of the present invention is to provide an electric tractor in which a plurality of electrical components are suitably arranged.

[3] A problem corresponding to background art [2] is as follows.

In the case of a configuration in which an electric tractor includes a plurality of electric motors, a distribution unit for distributing electric power from a battery is required. Here, a problem arises in how to arrange the distribution unit without causing unnecessary wiring in order to efficiently supply electric power from the battery to the electric motors.

An object of the present invention is to provide an electric tractor capable of efficiently distributing electric power from a battery to a plurality of electric motors.

### Means for Solving Problem

[1] A solving means corresponding to problem [1] is as follows.

The present invention is characterized by including: at least one battery; a motor configured to perform driving with use of electric power supplied from the at least one battery; a travel device configured to be driven by the motor; and a support mechanism having a first support and a second support, the first support supporting the at least one battery, and the second support supporting an electrical component.

According to this configuration, the support mechanism supports the battery. Further, the support mechanism also supports the electrical component. This makes it easier to secure a wide space for disposing the battery than in the case where a mechanism for supporting the battery and a mechanism for supporting the electrical component are separately provided. As a result, batteries having a relatively large size can be mounted.

That is, according to this configuration, an electric tractor can be realized in which a battery having a relatively large capacity is mounted.

Furthermore, in the present invention, preferably, the support mechanism has left and right support frames, each of the support frames is disposed in an orientation extending along a side wall of the at least one battery, and the at least one battery is disposed at a position sandwiched between the left and right support frames.

According to this configuration, the left and right support frames of the support mechanism protect side portions of the battery. Thus, the side portions of the battery can be protected without providing dedicated members for protecting the side portions of the battery. This makes it easier to suppress an increase in manufacturing costs.

Furthermore, preferably, the at least one battery includes a plurality of batteries, and the first support supports the plurality of batteries.

According to this configuration, the support mechanism supports the plurality of batteries. This makes it easier to secure a larger space for disposing the batteries that in the case where a plurality of mechanisms corresponding to the number of batteries are provided to support the plurality of batteries. As a result, batteries having a relatively large size can be mounted.

Furthermore, in the present invention, preferably, the plurality of batteries are arranged next to each other in an up-down direction.

According to this configuration, the width of the vehicle body in the left-right direction is smaller than in the case where the plurality of batteries are arranged in the left-right direction. In addition, according to this configuration, the width of the vehicle body in the front-rear direction is smaller than in the case where the plurality of batteries are arranged in the front-rear direction. Accordingly, it is possible to realize an electric tractor having relatively small left-right and front-rear dimensions of the vehicle body.

Furthermore, in the present invention, preferably, the plurality of batteries are spaced apart via a gap.

According to this configuration, air is present between the plurality of batteries. Then, the batteries are effectively cooled, for example, due to an air flow caused by traveling wind or wind generated by a fan or the like. This makes it possible to realize an electric tractor in which the batteries are effectively cooled.

[2] A solving means corresponding to problem [2] is as follows.

The present invention is characterized by including: at least one first battery; a motor configured to perform driving with use of electric power supplied from the at least one first battery; a travel device configured to be driven by the motor; and a plurality of electrical components, the plurality of electrical components being disposed in a distributed manner on left and right sides of the at least one first battery.

Accordingly this configuration, the plurality of electrical components are disposed in a distributed manner on the left and right sides of the first battery. This improves weight balance in the left-right direction of the vehicle body compared to the case where the plurality of electrical components are disposed in a concentrated manner on the left or right side of the first battery.

Further, the positions of the plurality of electrical components are more likely to be lower than in the case where the plurality of electrical components are disposed in a concentrated manner above the first battery. This lowers the center of gravity of the vehicle body. As a result, stability of the vehicle body is improved.

Further, the positions of the plurality of electrical components are more likely to be higher than in the case where the plurality of electrical components are disposed in a concentrated manner below the first battery. Thus, mud water or the like coming from the ground is less likely to adhere to the plurality of electrical components.

That is, according to this configuration, an electric tractor can be realized in which the plurality of electrical components are suitably arranged.

Furthermore, in the present invention, preferably, the plurality of electrical components include: a second battery for an auxiliary device; a voltage converter configured to step down electric power from the at least one first battery and supply the electric power to the second battery; and a junction box, and the voltage converter and the junction box are disposed in a distributed manner on the left and right sides of the at least one first battery.

According to this configuration, weight balance in the left-right direction of the vehicle body is more likely to be improved than in the case where the voltage converter and the junction box are disposed in a concentrated manner on the left or right side of the first battery.

Furthermore, in the present invention, preferably, the at least one first battery includes two first batteries, the two first batteries are arranged next to each other in an up-down direction, and the voltage converter and the junction box are both disposed below a lower end position of the upper first battery.

According to this configuration, the positions of the voltage converter and the junction box are relatively low. This lowers the center of gravity of the vehicle body. As a result, stability of the vehicle body is improved.

Furthermore, in the present invention, preferably, the electric tractor further includes a first cooling path and a second cooling path in each of which a coolant is circulatable, wherein the first cooling path and the second cooling path are independent of each other, the voltage converter is included in the first cooling path, the at least one first battery is included in the second cooling path, at least a portion of the first cooling path passes through one of the left and right sides of the at least one first battery, and at least a portion of the second cooling path passes through another one of the left and right sides of the at least one first battery.

According to this configuration, weight balance in the left-right direction of the vehicle body is more likely to be improved than in the case where both the first cooling path and the second cooling path pass through the one of the left and right sides of the first battery, and the case where both the first cooling path and the second cooling path pass through the other one of the left and right sides of the first battery.

Furthermore, in the present invention, preferably, the at least one first battery includes two first batteries, the two first batteries are arranged next to each other in an up-down direction, and the plurality of electrical components are disposed in a distributed manner above and below a lower end position of the upper first battery.

According to this configuration, the electrical components that are disposed respectively above and below the lower end position of the upper first battery are easily disposed so as to overlap each other in a plan view. Thus, the space required for arranging the plurality of electrical components is likely to be small in a plan view. As a result, an electric tractor having a compact size in a plan view is easily realized.

[3] A solving means corresponding to problem [3] is as follows.

An electric tractor of the present invention is characterized by including: a battery configured to store electric power; a first electric motor for travel configured to perform driving in response to receiving supply of electric power from the battery, a second electric motor for at least one of work and hydraulic drive configured to perform driving in response to receiving supply of electric power from the battery; and a distribution unit configured to distribute electric power from the battery to the first electric motor and the second electric motor, the distribution unit being disposed adjacent to a side surface portion of the battery, the side surface portion extending in an up-down direction.

According to the present invention, the distribution unit is disposed adjacent to the side surface portion of the battery. The side surface portion of the battery is a portion that is more easily reachable by an operator's hand than an upper surface portion and a lower surface portion of the battery. This configuration in which the distribution unit is disposed at the side surface portion facilitates, for example, the operator's work of connecting wiring between the battery and each of the first electric motor and the second electric motor. Further, the configuration in which the distribution unit is disposed adjacent to the side surface portion of the battery makes it possible to minimize the wiring distance between the battery and the distribution unit. This enables a configuration that does not cause waste in wiring in both structural aspects and assembly man-hour aspects. That is, the present invention realizes an electric tractor capable of efficiently distributing electric power from the battery to the plurality of electric motors.

In the present invention, preferably, the electric tractor further includes a cover member covering the battery, the cover member having a pivotable portion configured to pivot to enable opening and closing and a fixed portion fixed below the pivotable portion, wherein the fixed portion has a porous mesh portion, and the distribution unit is disposed adjacent to the mesh portion.

According to this configuration, the cover member covers the distribution unit. Thus, the battery and the distribution unit are less likely to come into contact with foreign matter while the pivotable portion is closed. In addition, with the porous mesh portion formed in the fixed portion, entry of foreign matter into an internal space of the cover member is suppressed, while heat in the internal space is discharged to the outside through the mesh portion. Further, the configuration in which the distribution unit is adjacent to the mesh portion promotes heat dissipation from the distribution unit.

In the present invention, preferably, the distribution unit includes: a first electrical connection port connecting a power cable on the battery side; a second electrical connection port connecting a power cable on the first electric motor side; and a third electrical connection port connecting a power cable on the second electric motor side, the first electric motor and the second electric motor are positionally shifted toward a rear side of a vehicle body relative to the battery, and the first electrical connection port is located at a front portion of the distribution unit, and the second electrical connection port and the third electrical connection port are located at rear portions of the distribution unit.

According to this configuration, the first electrical connection port connected to the battery side and the two electrical connection ports (the second electrical connection port and the third electrical connection port) connected to the electric motor side are disposed in a distributed manner at the front and rear portions of the distribution unit. This enables the case of the distribution unit to be made compact compared to a configuration in which the first electrical connection port, the second electrical connection port, and the third electrical connection port are located in a concentrated manner at the front or rear portion of the distribution unit. Further, with this configuration, the electrical cable extended from the second electrical connection port toward the first electric motor and the electrical cable extended from the third electrical connection port toward the second electric motor are wired as straight as possible along the front-rear direction. This further simplifies the wiring configuration of the electrical cables, making it possible to distribute electric power more efficiently from the battery to the plurality of electric motors.

In the present invention, preferably, the electric tractor further includes a charging socket configured to receive input electric power for charging the battery, wherein the distribution unit includes a fourth electrical connection port connecting a power cable on the charging socket side.

According to this configuration, wiring for charging the battery from the charging socket is also connected to the distribution unit. This enables a configuration in which the distribution unit collectively manages power wiring for the battery.

In the present invention, preferably, the electric tractor further includes a radiator configured to cool at least one of the battery, the first electric motor, and the second electric motor; and a cooling fan configured to generate cooling air, wherein the radiator and the cooling fan are located forward of the battery and the distribution unit, and the cooling fan is configured to generate the cooling air flowing rearward.

According to this configuration, the radiator and the cooling fan are disposed forward of the battery and the distribution unit. The cooling fan generates cooling air toward the side on which the distribution unit is located. According to this configuration, the cooling fan is used for both cooling the radiator (promotion of heat dissipation) and cooling the battery and the distribution unit with cooling air.

In the present invention, preferably, the distribution unit has a case having a front portion with a width in the up-down direction that decreases as the front portion extends forward.

According to this configuration, the flow of cooling air is divided into the upper and lower sides of the distribution unit, thus promoting heat dissipation of the distribution unit using the cooling air.

In the present invention, preferably, the electric tractor further includes hydraulic piping connected to a hydraulic drive device configured to perform driving based on driving of the second electric motor, wherein the hydraulic piping is disposed on one of left and right sides of the battery, and the distribution unit is disposed on another one of the left and right sides of the battery.

According to this configuration, the piping of a hydraulic system and the electrical cables extending between the battery and the two electric motors are distributed to the left and right of the battery. This further simplifies the wiring configuration of the electrical cables, making it possible to distribute electric power more efficiently from the battery to the plurality of electric motors.

### Brief Description of the Drawings

FIG. 1 illustrates a first embodiment (the same applies up to FIG. 14 below) and is a left side view of an electric tractor.
FIG. 2 is a plan view showing a configuration of a front frame, a housing frame, and other components.
FIG. 3 is a left side view showing a configuration of a first battery and other components.
FIG. 4 is a right side view showing the configuration of the first battery and other components.
FIG. 5 is a vertical front view showing the configuration of the first battery and other components.
FIG. 6 is a left side view showing a configuration of a support mechanism.
FIG. 7 is a right side view showing a configuration of the support mechanism.
FIG. 8 is a plan view showing a configuration of the support mechanism.
FIG. 9 is a left side view showing a configuration of a joint section and other components.
FIG. 10 is a plan view showing configurations of a first battery support, a second battery support, and other components.
FIG. 11 is a rear view showing a configuration of the first battery support, the second battery support, and other components.
FIG. 12 is a diagram showing circulation paths of a first coolant and a second coolant.
FIG. 13 is a diagram showing a configuration of a first cooling path, a second cooling path, and other components.
FIG. 14 is a diagram showing circulation paths of the first coolant and the second coolant according to a first variation.
FIG. 15 illustrates a second embodiment (the same applies up to FIG. 21 below) and is an overall side view of an electric tractor.
FIG. 16 is an overall plan view of the electric tractor.
FIG. 17 is an overall side view of the electric tractor with a front loader attached.
FIG. 18 is a block diagram showing an electric power system and a motive power system of the electric tractor.
FIG. 19 is a front view showing main parts of a battery and devices disposed in the vicinity of the battery.
FIG. 20 is a side view showing main parts of the battery, a distribution unit, and other components.
FIG. 21 is a side view showing main parts of the battery, a distribution unit, and other components.

### Best Mode for Carrying out the Invention

### [First Embodiment]

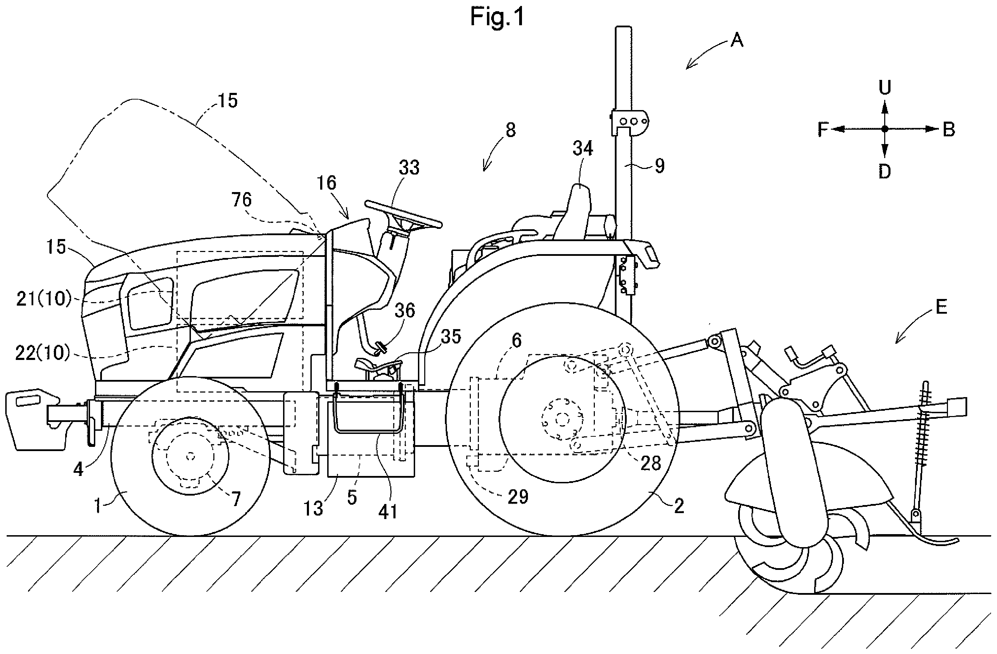

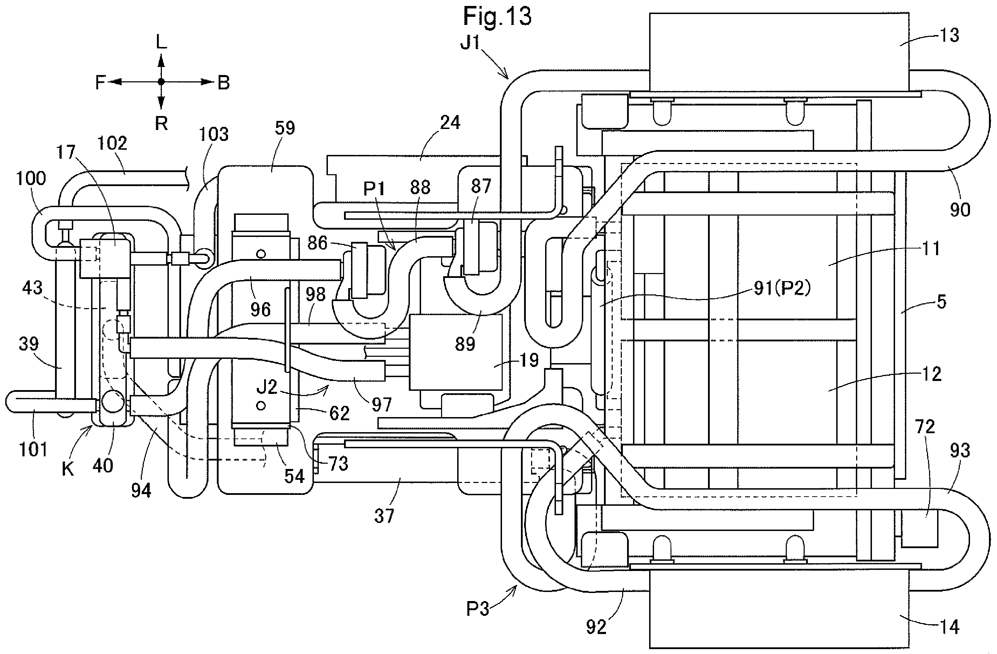

A mode for carrying out the present invention will be described with reference to the drawings. More specifically, the first embodiment will be described with reference to FIGS. 1 to 14. In the following description, unless otherwise stated, the direction of arrow F in the drawings is defined as "front", the direction of arrow B is defined as "rear", the direction of arrow L is defined as "left", and the direction of arrow R is defined as "right". The direction of the arrow U and the direction of the arrow D in the diagrams correspond to up and down, respectively.

### [Overall Configuration of Electric Tractor]

As shown in FIG. 1, an electric tractor A has left and right front wheels 1 (each corresponding to a "travel device" according to the present invention) at front portions of a vehicle body. The electric tractor A also has left and right rear wheels 2 (each corresponding to a "travel device" according to the present invention) at rear portions of the vehicle body. The vehicle body is supported by the front wheels 1 and the rear wheels 2.

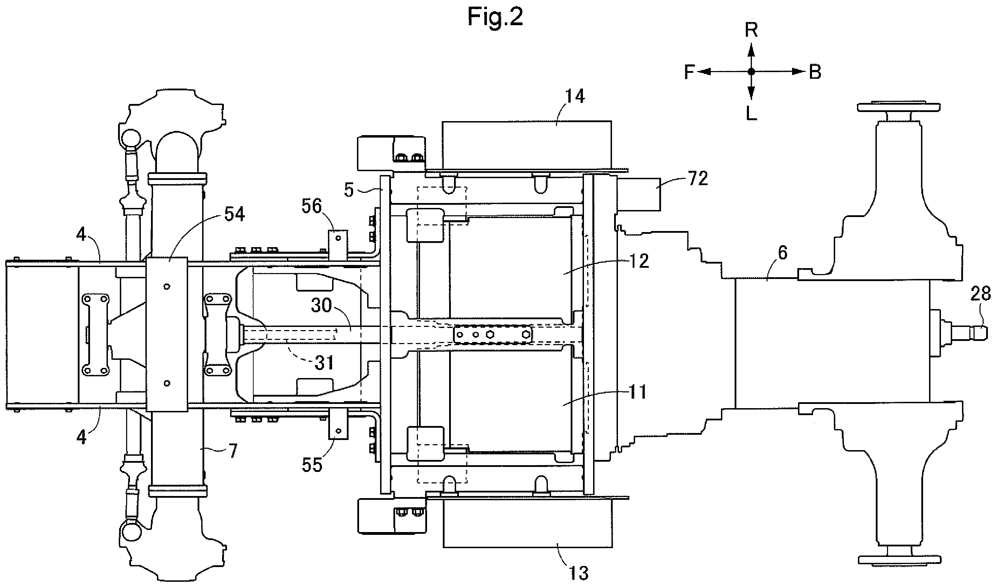

The electric tractor A includes left and right front frames 4, a housing frame 5, and a transmission case 6. As shown in FIGS. 1 and 2, the front frames 4 extend in a front-rear direction. Rear end portions of the front frames 4 are joined to a front portion of the housing frame 5. The transmission case 6 is connected to a rear portion of the housing frame 5.

As shown in FIG. 2, a first motor 11 (corresponding to a "motor" according to the present invention) and a second motor 12 are housed in the housing frame 5. Note that both the first motor 11 and the second motor 12 are electric motors.

As shown in FIGS. 1 and 2, a front axle case 7 is attached to the front frames 4. The left and right front wheels 1 are attached to the front axle case 7. The left and right rear wheels 2 are attached to the transmission case 6.

An operator section 8 in which an operator can ride is provided above the housing frame 5 and the transmission case 6. That is, the electric tractor A includes the operator section 8 in which an operator can ride.

A ROPS frame 9 is attached to the transmission case 6 and extends upward. The ROPS frame 9 is provided rearward of the operator section 8. A plurality of first batteries 10 (each corresponding to a "battery" according to the present invention) are supported by the front frames 4.

The plurality of first batteries 10 are disposed at a front portion of the electric tractor A. Further, a hood 15 that covers the plurality of first batteries 10 is provided. Note that, although not specifically limited, the number of first batteries 10 is two in the present embodiment.

One or more air intake openings (not shown) are formed in a front portion of the hood 15. Traveling air (air) is introduced into the interior of the hood 15 through the air intake openings.

The first motor 11 and the second motor 12 are driven by electric power supplied from the plurality of first batteries 10. Note that, although not specifically limited, in the present embodiment, the plurality of first batteries 10 are electrically connected in series.

As described above, the electric tractor A includes the first batteries 10 disposed at the front portion of the vehicle body. More specifically, the electric tractor A includes the plurality of first batteries 10. Further specifically, the electric tractor A includes two first batteries 10. Moreover, the electric tractor A includes the first motor 11 and the second motor 12 that are driven by electric power supplied from the first batteries 10.

A first inverter 13 is attached to a left side portion of the housing frame 5. A second inverter 14 is attached to a right side portion of the housing frame 5. Electric power from the plurality of first batteries 10 is supplied to the first inverter 13. Based on an operation of a shift pedal 35 (see FIG. 1) of the operator section 8, DC power from the plurality of first batteries 10 is converted into AC power by the first inverter 13 and supplied to the first motor 11. The first motor 11 is thereby driven.

As described above, the electric tractor A includes the first inverter 13 that converts DC power from the first batteries 10 into AC power and supplies the AC power to the first motor 11.

Electric power from the plurality of first batteries 10 is supplied to the second inverter 14. DC power from the plurality of first batteries 10 is converted into AC power by the second inverter 14, and supplied to the second motor 12. The second motor 12 is thereby driven.

As described above, the electric tractor A includes the second inverter 14 that converts DC power from the first batteries 10 into AC power and supplies the AC power to the second motor 12.

Although not specifically limited, each of the first inverter 13 and the second inverter 14 may be housed in a case (not shown).

Note that the first batteries 10 are, for example, lithium-ion batteries. Although not shown, each first battery 10 includes low-voltage small unit cells and a storage case. A large number of unit cells are stacked in each first battery 10. The large number of unit cells are stored and sealed by the storage case. The output voltage of the first battery 10 is, for example, 400 volts.

A hydraulic multi-plate travel clutch (not shown), a transmission (not shown), and a rear wheel differential device (not shown), which constitute a power transmission mechanism, are provided inside the transmission case 6. The transmission is configured as a gear-type transmission and is capable of switching the gear shift state between two stages, namely a high-speed state and a low-speed state. Motive power of an output shaft (not shown) of the first motor 11 is transmitted to the travel clutch, transmitted from the travel clutch to the transmission, and transmitted from the transmission to the rear wheels 2 via the rear wheel differential device. Note that the output shaft of the first motor 11 extends rearward.

Inside the transmission case 6, motive power branched from between the transmission and the rear wheel differential device is transmitted to a later-described front wheel transmission shaft 31, transmitted from the front wheel transmission shaft 31 to a front wheel differential device (not shown) inside the front axle case 7, and transmitted from the front wheel differential device to the front wheels 1.

With the above-described configuration, the left and right front wheels 1 and the left and right rear wheels 2 are driven by the first motor 11. That is, the electric tractor A includes the left and right front wheels 1 and the left and right rear wheels 2 that are driven by the first motor 11.

A PTO shaft 28 is provided at a rear portion of the transmission case 6 and extends rearward. A mid PTO shaft 29 is provided at a bottom portion of the transmission case 6 and extends forward. A hydraulic multi-plate PTO clutch (not shown) and a PTO power transmission system (not shown), which constitute a power transmission mechanism, are provided inside the transmission case 6.

Motive power of an output shaft (not shown) of the second motor 12 is transmitted to the PTO clutch, transmitted from the PTO clutch to the PTO power transmission system, and transmitted from the PTO power transmission system to the PTO shaft 28 and the mid PTO shaft 29. Note that the output shaft of the second motor 12 extends rearward.

As shown in FIG. 1, in the case where a work device E is attached to a rear portion of the vehicle body, the motive power from the PTO shaft 28 is transmitted to the work device E. Thus, the PTO shaft 28 transmits the driving force of the second motor 12 to the work device E. Note that, in the example shown in FIG. 1, the work device E is a rotary tiller. However, the present invention is not limited thereto. The work device E attached to the rear portion of the vehicle body may be any device other than a rotary tiller.

Further, in the case where, for example, a work device E such as a mower (not shown) is attached to a lower portion of the vehicle body at a location between the front wheels 1 and the rear wheels 2 (i.e., a center portion of the vehicle body in the front-rear direction), the motive power from the mid PTO shaft 29 is transmitted to the work device E. However, the present invention is not limited thereto. The work device E attached to a center portion of the vehicle body in the front-rear direction may be any device other than a mower.

With the above-described configuration, the PTO shaft 28 and the mid PTO shaft 29 transmit the driving force of the second motor 12 to the work device E. That is, the electric tractor A includes the PTO shaft 28 and the mid PTO shaft 29 that transmit the driving force of the second motor 12 to the work device E.

The electric tractor A can travel while driving the work device E by simultaneously driving the first motor 11 and the second motor 12.

As shown in FIG. 2, a pipe member 30 spans between a rear portion of the housing frame 5 to the front axle case 7. The pipe member 30 extends along the front-rear direction. The aforementioned front wheel transmission shaft 31 is provided inside the pipe member 30. The front wheel transmission shaft 31 spans between the interior of the transmission case 6 to the front wheel differential device of the front axle case 7.

As shown in FIG. 1, the operator section 8 includes a steering wheel 33 for steering the front wheels 1, an operator seat 34, a shift pedal 35, a brake pedal 36, and the like. The operator can sit in the operator seat 34. A brake (not shown) capable of braking the left and right rear wheels 2 is activated in response to the operator operating the brake pedal 36. Thus, the left and right rear wheels 2 is subjected to a braking operation.

A step 41 for an operator to step on is attached to a lower left portion of the operator section 8. The operator uses this step 41 to board and deboard the operator section 8, mainly from the left side of the vehicle body.

### [Configuration of Interior of Hood]

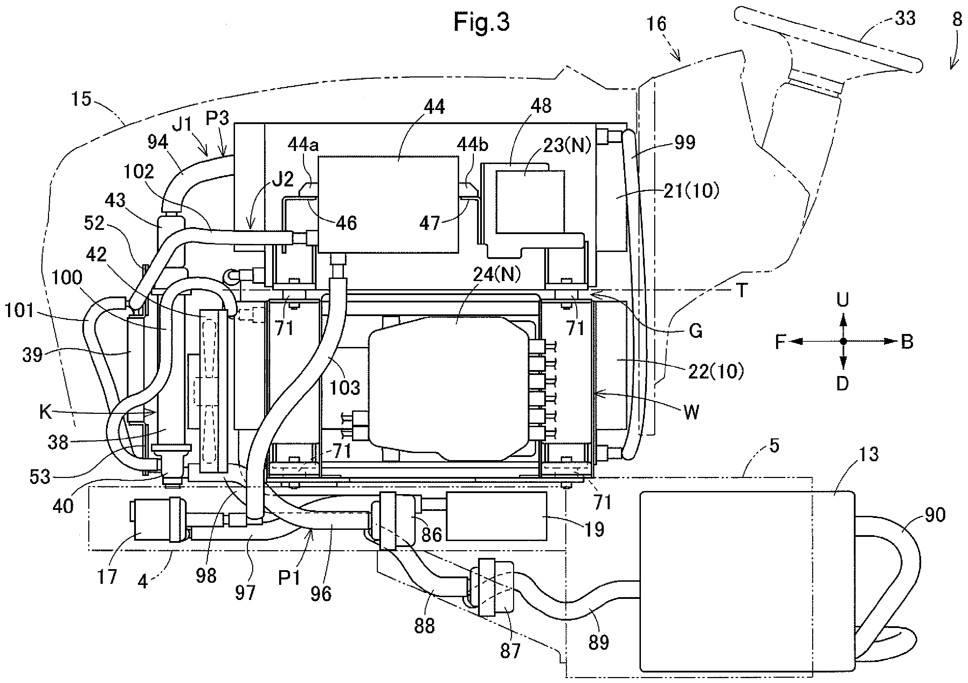

As shown in FIGS. 3 to 5, the electric tractor A includes an upper battery 21, a lower battery 22, a first radiator 38, a second radiator 39, a third radiator 40, a cooling fan 42, a first reserve tank 43, and a second reserve tank 44.

The electric tractor A also includes a plurality of electrical components N. In the present embodiment, specifically, the plurality of electrical components N include a charging control device 23, a junction box 24, a first control unit 25, a second control unit 26, a second battery 27, and a voltage converter 37.

The upper battery 21, the lower battery 22, the charging control device 23, the junction box 24, the first control unit 25, the second control unit 26, the second battery 27, the voltage converter 37, the first radiator 38, the second radiator 39, the third radiator 40, the cooling fan 42, the first reserve tank 43, and the second reserve tank 44 are all covered (i.e., housed) by the hood 15.

Both the upper battery 21 and the lower battery 22 are the first batteries 10. That is, the electric tractor A includes the hood 15 that covers the first batteries 10. Although not specifically limited, specifications of the upper battery 21 and the lower battery 22 are identical to each other. In other words, the upper battery 21 and the lower battery 22 are batteries of the same type.

The upper battery 21 is disposed above the lower battery 22. Thus, the plurality of first batteries 10 are arranged in the up-down direction. More specifically, the two first batteries 10 are arranged in the up-down direction.

A lower surface of the upper battery 21 and an upper surface of the lower battery 22 are separated from each other. That is, a gap G is present between the upper battery 21 and the lower battery 22. In this manner, the gap G is present between the plurality of first batteries 10.

The electric tractor A also includes a charging socket (not shown). Each first battery 10 is charged in response to an operator or the like inserting an adapter of a charger into the charging socket. The charging socket receives electric power for charging each first battery 10. The standard for the charging socket may be, for example, CHAdeMO, CCS2, GB/T, ChaoJi, NACS, or the like.

The charging control device 23 may be a power module or a programmable logic controller (PLC) having a microcomputer that executes a program for charging each first battery 10, or may be a relay circuit that operates based on electrical signals. The charging control device 23 controls a charging voltage and a charging current for each first battery 10 when charging (including rapid charging) the first battery 10.

The junction box 24 is electrically connected to the first batteries 10, the first inverter 13, the second inverter 14, the voltage converter 37, and the charging socket. The junction box 24 functions as a hub that distributes electric power from the first batteries 10 to the first inverter 13, the second inverter 14, and the voltage converter 37. Further, the junction box 24 receives charging electric power from the charging socket and transmits the received charging electric power to the first batteries 10.

Both the first control unit 25 and the second control unit 26 are electronic control units (ECUs) that control respective parts of the electric tractor A. Although not specifically limited, for example, the first control unit 25 may be an ECU for controlling electric components (more specifically, e.g., the cooling fan 42, as well as a first pump 86 and a second pump 87, which will be described later, etc.), and the second control unit 26 may be an ECU for controlling the main body (more specifically, e.g., the first inverter 13, the second inverter 14, etc.).

The second battery 27 is a battery for auxiliary devices. The second battery 27 is, for example, a lead battery. The second battery 27 supplies low-voltage (e.g., 12-volt) electric power to drive the auxiliary devices (e.g., the cooling fan 42, and the later-described first pump 86 and second pump 87, etc.). The output voltage of the second battery 27 is lower than an output voltage of the first batteries 10. Note that the second battery 27 may also be capable of supplying electric power to the ECUs such as the first control unit 25 and the second control unit 26.

Further, electric power is supplied from the first batteries 10 to the voltage converter 37. The voltage converter 37 steps down the electric power from the first batteries 10 and supplies the resulting electric power to the second battery 27. The second battery 27 can thereby be charged.

As described above, the plurality of electrical components N include the second battery 27 for the auxiliary devices, the voltage converter 37 that steps down the electric power from the first batteries 10 and supplies the resulting electric power to the second battery 27, and the junction box 24.

The electric tractor A includes a first cooling path J1 and a second cooling path J2 in which a coolant circulates. A first coolant (corresponding to a "coolant" according to the present invention) circulates in the first cooling path J1. A second coolant (corresponding to the "coolant" according to the present invention) circulates in the second cooling path J2. That is, the electric tractor A includes the first cooling path J1 in which the first coolant circulates, and the second cooling path J2 in which the second coolant circulates.

Although not specifically limited, the first coolant and the second coolant are different types of coolant in the present embodiment. Specifically, the first coolant is a known long-life coolant (LLC). The second coolant is an insulating oil.

The first radiator 38 is included in the first cooling path J1. The first radiator 38 cools the first coolant. That is, the electric tractor A includes the first radiator 38 that is included in the first cooling path J1 and cools the first coolant.

The second radiator 39 is included in the second cooling path J2. The second radiator 39 cools the second coolant. That is, the electric tractor A includes the second radiator 39 that is included in the second cooling path J2 and cools the second coolant.

The third radiator 40 is included in the second cooling path J2. The third radiator 40 cools the second coolant.

The third radiator 40 is disposed below the first radiator 38. The first radiator 38 and the third radiator 40 constitute a radiator device K. The second radiator 39 is disposed forward of the radiator device K.

The cooling fan 42 is disposed rearward of the first radiator 38, the second radiator 39, and the third radiator 40. The cooling fan 42 sends cooling air rearward. Thus, outside air is introduced into the interior of the hood 15 through the aforementioned air intake openings and passes through the first radiator 38, the second radiator 39, and the third radiator 40. As a result, the first radiator 38, the second radiator 39, and the third radiator 40 are cooled.

Note that the cooling fan 42 is disposed on the front side of the upper battery 21 and the lower battery 22. Further, the cooling fan 42 is disposed forward of the lower battery 22.

The first reserve tank 43 is included in the first cooling path J1. The first reserve tank 43 is capable of storing the first coolant.

The second reserve tank 44 is included in the second cooling path J2. The second reserve tank 44 is capable of storing the second coolant.

As shown in FIGS. 3 to 5, the charging control device 23 and the junction box 24 are disposed on the left side of the first batteries 10. The first control unit 25, the second control unit 26, the second battery 27, and the voltage converter 37 are disposed on the right side of the first batteries 10. That is, the plurality of electrical components N are disposed in a distributed manner on the left and right sides of the first batteries 10. The voltage converter 37 and the junction box 24 are also disposed in a distributed manner on the left and right sides of the first batteries 10.

FIGS. 3 to 5 show a reference position T. The reference position T is a lower end position of the upper battery 21. The charging control device 23, the second reserve tank 44, the first control unit 25, the second control unit 26, and the second battery 27 are all disposed above the reference position T. The voltage converter 37 and the junction box 24 are both disposed below the reference position T.

In this manner, the plurality of electrical components N are disposed in a distributed manner above and below the lower end position of the upper first battery 10. Further, the voltage converter 37 and the junction box 24 are both disposed below the lower end position of the upper first battery 10.

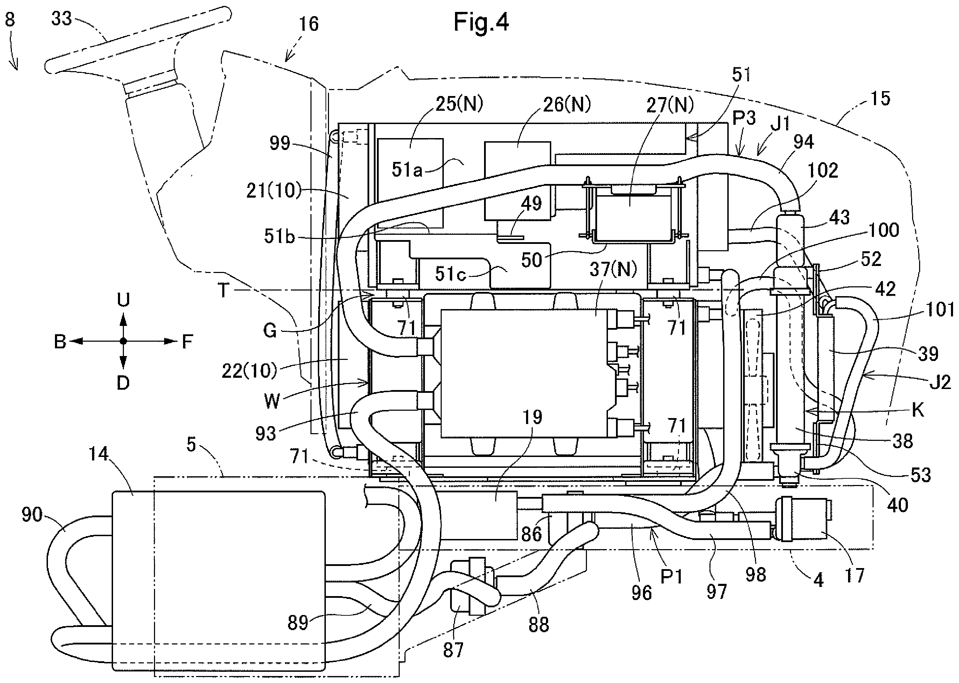

As shown in FIG. 3, the second reserve tank 44 is located forward of the charging control device 23. As shown in FIG. 4, the second control unit 26 is located forward of the first control unit 25. Further, the second battery 27 is located forward of the second control unit 26.

### [Support Structure of Members Inside Hood]

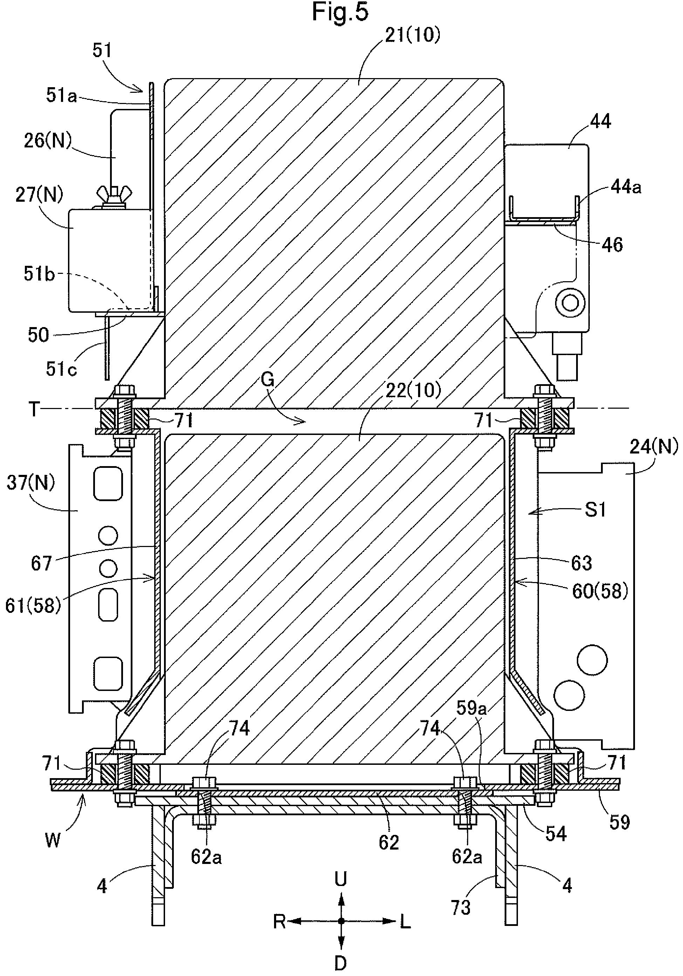

As shown in FIGS. 3 and 5, a first support stay 46 and a second support stay 47 are provided on a left side wall of the upper battery 21. Note that the first support stay 46 and the second support stay 47 may be portions of the upper battery 21, but need not necessarily be included in the upper battery 21.

The second support stay 47 is disposed rearward of the first support stay 46. The second reserve tank 44 is provided with a front support 44a extending forward at its front end portion. The second reserve tank 44 is also provided with a rear support 44b extending rearward at its rear end portion.

The front support 44a is in contact with the first support stay 46 from above and supported by the first support stay 46. The rear support 44b is in contact with the second support stay 47 from above and supported by the second support stay 47. Thus, the second reserve tank 44 is supported on the left side wall of the upper battery 21 via the first support stay 46 and the second support stay 47.

A first plate-shaped member 48 is attached to the second support stay 47, for example, by welding, bolting, or the like. The first plate-shaped member 48 is disposed rearward of the second support stay 47. Further, the first plate-shaped member 48 is disposed facing the left side wall of the upper battery 21.

The charging control device 23 is in contact with the first plate-shaped member 48 from the left side and supported by the first plate-shaped member 48. The charging control device 23 may be fixed to the first plate-shaped member 48, for example, by bolting or the like.

As shown in FIGS. 4 and 5, a third support stay 49 and a fourth support stay 50 are provided on a right side wall of the upper battery 21. Note that the third support stay 49 and the fourth support stay 50 may be portions of the upper battery 21, but need not necessarily be included in the upper battery 21.

As shown in FIGS. 4 and 5, the electric tractor A includes a second plate-shaped member 51. The second plate-shaped member 51 includes an upper portion 51a, a horizontal portion 51b, and a lower portion 51c. The upper portion 51a and the lower portion 51c are both in a vertical orientation and face the right side wall of the upper battery 21. The horizontal portion 51b is in a horizontal orientation.

A lower end portion of the upper portion 51a is connected to a left end portion of the horizontal portion 51b. An upper end portion of the lower portion 51c is connected to a right end portion of the horizontal portion 51b.

The horizontal portion 51b is in contact with the third support stay 49 from above and supported by the third support stay 49. Thus, the second plate-shaped member 51 is supported by the third support stay 49. Note that the second plate-shaped member 51 may be fixed to the third support stay 49, for example, by bolting or the like.

The first control unit 25 and the second control unit 26 are in contact with the upper portion 51a from the right side and supported by the upper portion 51a. The first control unit 25 and the second control unit 26 may be fixed to the upper portion 51a, for example, by bolting or the like.

Thus, the first control unit 25 and the second control unit 26 are supported on the right side wall of the upper battery 21 via the second plate-shaped member 51 and the third support stay 49.

As shown in FIGS. 4 and 5, the second battery 27 is in contact with the fourth support stay 50 from above and supported by the fourth support stay 50. Thus, the second battery 27 is supported on the right side wall of the upper battery 21 via the fourth support stay 50.

As shown in FIGS. 3 to 5, the electric tractor A includes a support mechanism W. The support mechanism W is supported by the left and right front frames 4. The voltage converter 37 and the junction box 24 are both supported by the support mechanism W.

As shown in FIGS. 3 and 4, the cooling fan 42 and the radiator device K are supported by the left and right front frames 4.

An upper support member 52 spans between an upper end portion of the radiator device K and an upper end portion of the second radiator 39. A lower support member 53 spans between a lower end portion of the radiator device K and a lower end portion of the second radiator 39. The second radiator 39 is supported by the upper support member 52 and the lower support member 53. Thus, the second radiator 39 is supported by the radiator device K via the upper support member 52 and the lower support member 53.

The first reserve tank 43 is in contact with the radiator device K from above and supported by the radiator device K.

### [Configuration of Support Mechanism]

As shown in FIG. 2, the electric tractor A includes a third plate-shaped member 54, a fifth support stay 55, and a sixth support stay 56.

The third plate-shaped member 54 is a plate-shaped member in a horizontal orientation. The third plate-shaped member 54 spans between the left front frame 4 and the right front frame 4. As shown in FIG. 5, the third plate-shaped member 54 is in contact with the left and right front frames 4 from above and supported by the left and right front frames 4.

As shown in FIG. 5, the electric tractor A includes a channel-shaped reinforcing frame 73. The reinforcing frame 73 is sandwiched between the left and right front frames 4 and fixed to the left and right front frames 4, for example, by welding or the like. The reinforcing frame 73 is also in contact with the third plate-shaped member 54 from below. The reinforcing frame 73 is fixed to the third plate-shaped member 54, for example by welding or the like.

The fifth support stay 55 and the sixth support stay 56 shown in FIG. 2 are both plate-shaped members bent into an L shape. The fifth support stay 55 is attached to the left front frame 4. The sixth support stay 56 is attached to the right front frame 4. The fifth support stay 55 and the sixth support stay 56 are disposed on the rear side of the third plate-shaped member 54.

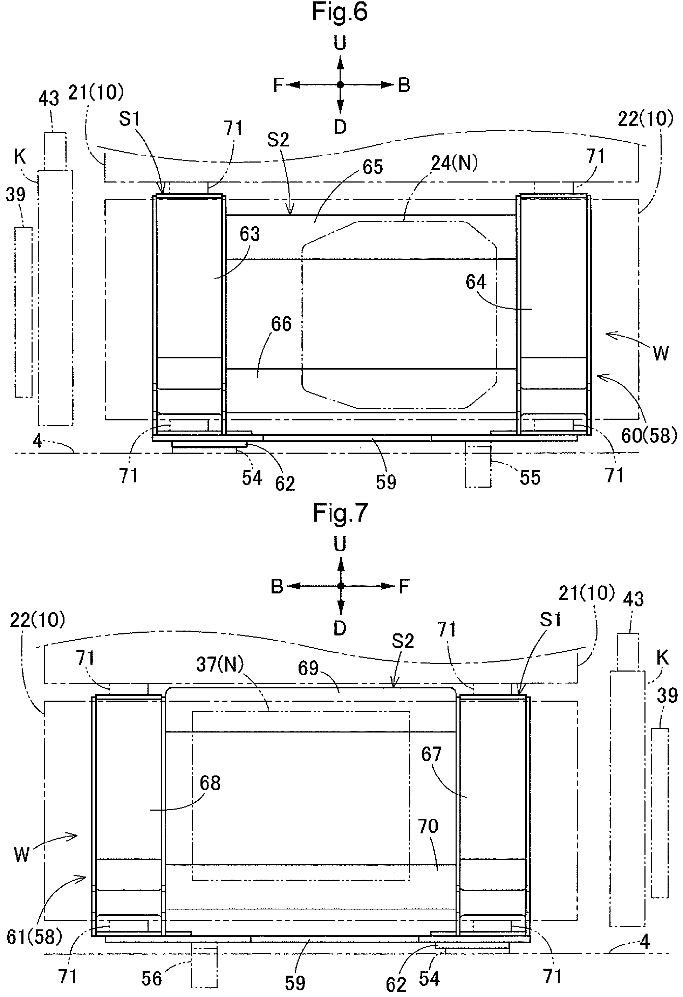

As shown in FIGS. 6 to 8, the support mechanism W is constituted by left and right support frames 58, a bottom plate 59, and a fourth plate-shaped member 62. That is, the support mechanism W has the left and right support frames 58.

The left and right support frames 58 include a left support frame 60 and a right support frame 61. The left support frame 60 is the support frame 58 on the left side. The right support frame 61 is the support frame 58 on the right side.

The left support frame 60 is disposed along a left side wall of the lower battery 22. The right support frame 61 is disposed along a right side wall of the lower battery 22. That is, the support frames 58 are disposed along the respective side walls of the lower battery 22. The lower battery 22 is disposed at a position sandwiched between the left and right support frames 58.

The bottom plate 59 is a plate-shaped member in a horizontal orientation. The left and right support frames 58 are in contact with the bottom plate 59 from above and supported by the bottom plate 59. The left and right support frames 58 are attached to the bottom plate 59 by, for example, welding, bolting, or the like.

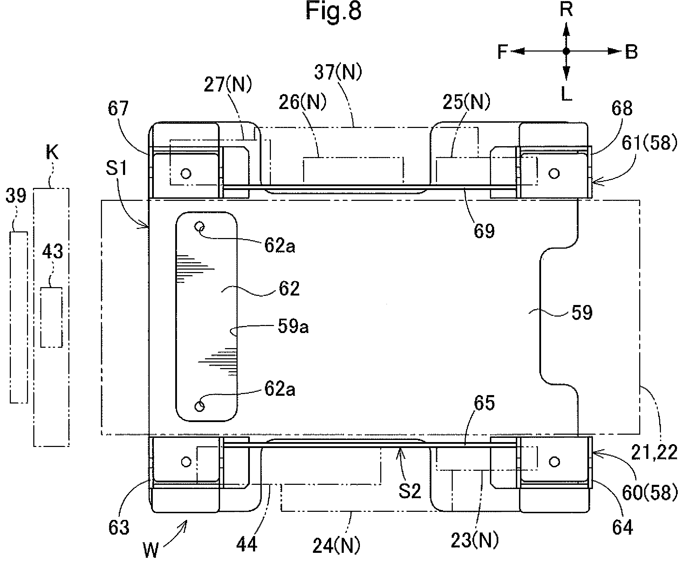

As shown in FIGS. 5 and 8, the bottom plate 59 has a hole 59a at its front portion. The fourth plate-shaped member 62 is a plate-shaped member in a horizontal orientation. The fourth plate-shaped member 62 is attached to a bottom surface of the bottom plate 59 to cover the hole 59a from below, for example, by welding, bolting, or the like.

As shown in FIGS. 6 and 7, the fourth plate-shaped member 62 is in contact with the third plate-shaped member 54 from above and supported by the third plate-shaped member 54. Thus, a front portion of the support mechanism W is supported by the left and right front frames 4 via the third plate-shaped member 54.

As shown in FIG. 5, the fourth plate-shaped member 62, the third plate-shaped member 54, and the reinforcing frame 73 are fastened together by fixing bolts 74. The fourth plate-shaped member 62 has bolt holes 62a. The fixing bolts 74 are inserted into the bolt holes 62a. Note that any number of fixing bolts 74 and bolt holes 62a may be provided.

As shown in FIG. 8, the bolt holes 62a are provided within the hole 59a (i.e., at positions corresponding to the hole 59a) in a plan view.

As shown in FIGS. 6 and 7, a rear portion of the support mechanism W is in contact with the fifth support stay 55 and the sixth support stay 56 from above and supported by the fifth support stay 55 and the sixth support stay 56. Thus, the rear portion of the support mechanism W is supported by the left and right front frames 4 via the fifth support stay 55 and the sixth support stay 56.

As shown in FIGS. 6 and 8, the left support frame 60 includes a first column frame 63, a second column frame 64, a first joint frame 65, and a second joint frame 66. The first column frame 63 and the second column frame 64 both extend in the up-down direction. Lower end portions of the first column frame 63 and the second column frame 64 are attached to an upper surface of the bottom plate 59, for example, by welding, bolting, or the like. The first column frame 63 is disposed on the front side of the second column frame 64.

The first joint frame 65 and the second joint frame 66 both extend in the front-rear direction. The first joint frame 65 is disposed above the second joint frame 66. A front end portion of the first joint frame 65 is joined to an upper portion of the first column frame 63. A rear end portion of the first joint frame 65 is joined to an upper portion of the second column frame 64. A front end portion of the second joint frame 66 is joined to a lower portion of the first column frame 63. A rear end portion of the second joint frame 66 is joined to a lower portion of the second column frame 64. Note that the first joint frame 65 and the second joint frame 66 are separated from each other in the up-down direction.

As shown in FIGS. 7 and 8, the right support frame 61 includes a third column frame 67, a fourth column frame 68, a third joint frame 69, and a fourth joint frame 70. The third column frame 67 and the fourth column frame 68 both extend in the up-down direction. Lower end portions of the third column frame 67 and the fourth column frame 68 are attached to an upper surface of the bottom plate 59, for example, by welding, bolting, or the like. The third column frame 67 is disposed on the front side of the fourth column frame 68.

The third joint frame 69 and the fourth joint frame 70 both extend in the front-rear direction. The third joint frame 69 is disposed above the fourth joint frame 70. A front end portion of the third joint frame 69 is joined to an upper portion of the third column frame 67. A rear end portion of the third joint frame 69 is joined to an upper portion of the fourth column frame 68. A front end portion of the fourth joint frame 70 is joined to a lower portion of the third column frame 67. A rear end portion of the fourth joint frame 70 is joined to a lower portion of the fourth column frame 68. Note that the third joint frame 69 and the fourth joint frame 70 are separated from each other in the up-down direction.

As shown in FIGS. 6 to 8, the bottom plate 59, the first column frame 63, the second column frame 64, the third column frame 67, and the fourth column frame 68 constitute a first support S1. The first support S1 supports the upper battery 21 and the lower battery 22. That is, the first support S1 supports the plurality of first batteries 10.

Specifically, as shown in FIGS. 5 to 7, a left front portion of the upper battery 21 is supported by an upper end portion of the first column frame 63 of the first support S1 via a first elastic member 71. A right front portion of the upper battery 21 is supported by an upper end portion of the third column frame 67 of the first support S1 via the first elastic member 71. A left rear portion of the upper battery 21 is supported by an upper end portion of the second column frame 64 of the first support S1 via the first elastic member 71. A right rear portion of the upper battery 21 is supported by an upper end portion of the fourth column frame 68 of the first support S1 via the first elastic member 71.

A left front portion of the lower battery 22 is supported by a left front portion of the bottom plate 59 of the first support S1 via the first elastic member 71. A right front portion of the lower battery 22 is supported by a right front portion of the bottom plate 59 of the first support S1 via the first elastic member 71. A left rear portion of the lower battery 22 is supported by a left rear portion of the bottom plate 59 of the first support S1 via the first elastic member 71. A right rear portion of the lower battery 22 is supported by a right rear portion of the bottom plate 59 of the first support S1 via the first elastic member 71.

Note that the first elastic member 71 is not specifically limited, but may be, for example, a rubber mount.

As shown in FIGS. 6 to 8, the first joint frame 65, the second joint frame 66, the third joint frame 69, and the fourth joint frame 70 constitute a second support S2. The second support S2 supports the electrical components N (more specifically, the junction box 24 and the voltage converter 37). That is, the electric tractor A includes the support mechanism W having the first support S1 and the second support S2.

Specifically, the junction box 24 is in contact with the first joint frame 65 and the second joint frame 66 of the second support S2 from the left side and supported by the first joint frame 65 and the second joint frame 66. The junction box 24 is attached to the first joint frame 65 and the second joint frame 66, for example, by bolting or the like.

The voltage converter 37 is in contact with the third joint frame 69 and the fourth joint frame 70 of the second support S2 from the right side and supported by the third joint frame 69 and the fourth joint frame 70. The voltage converter 37 is attached to the third joint frame 69 and the fourth joint frame 70, for example, by bolting or the like.

### [Hydraulic Pump]

As shown in FIG. 2, the electric tractor A includes a hydraulic pump 72. The hydraulic pump 72 is attached to a right rear portion of the housing frame 5. Motive power from an output shaft (not shown) of the second motor 12 is transmitted to a power transmission gear (not shown), and is transmitted from the power transmission gear to an input shaft (not shown) of the hydraulic pump 72. The motive power from the second motor 12 is thereby transmitted to the hydraulic pump 72. As a result, the hydraulic pump 72 is driven.

In this manner, the electric tractor A includes the hydraulic pump 72 driven by the second motor 12.

Note that the aforementioned power transmission gear is housed in a rear portion of the housing frame 5. The input shaft of the hydraulic pump 72 extends forward.

The hydraulic pump 72 supplies hydraulic oil to various parts of the electric tractor A. For example, in the case where a front loader device (not shown) is attached to the vehicle body, hydraulic oil is supplied from the hydraulic pump 72 to the front loader device, whereby the front loader device operates. Further, hydraulic oil is supplied from the hydraulic pump 72 to various hydraulic devices (not shown) in the vehicle body, whereby the hydraulic devices operate.

### [Pillar Frame]

As shown in FIGS. 1 to 3, a steering wheel support mechanism 16 is provided at a front end portion of the operator section 8. The steering wheel 33 is supported by the steering wheel support mechanism 16.

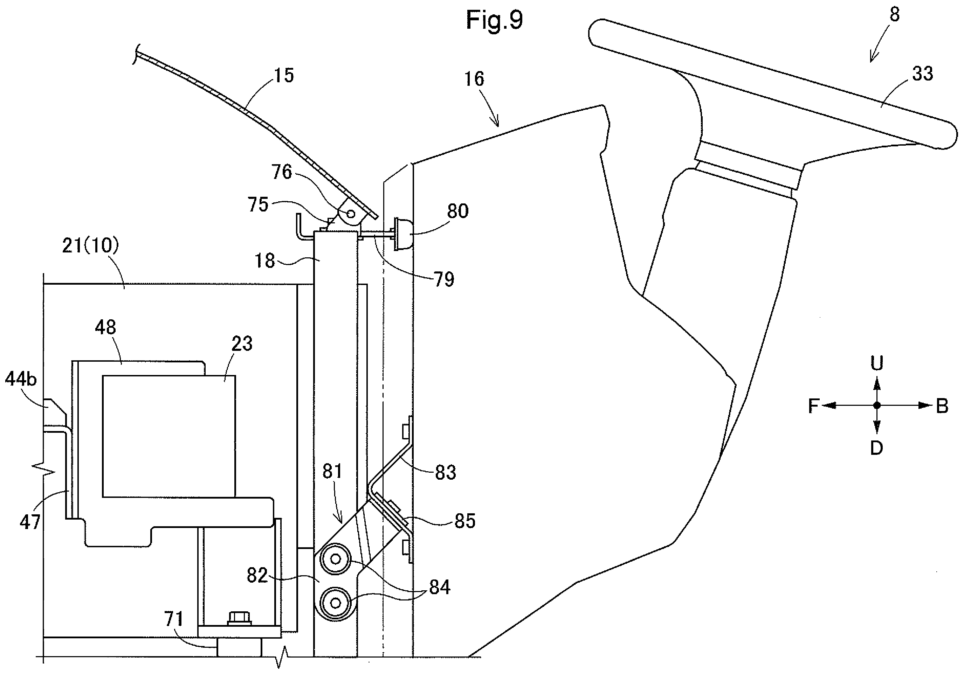

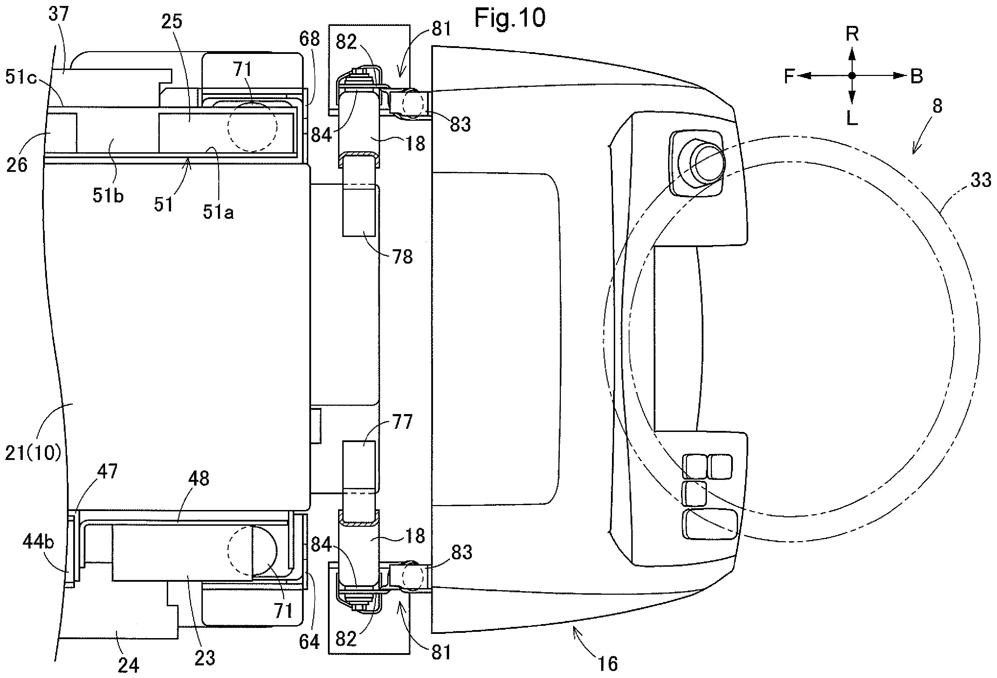

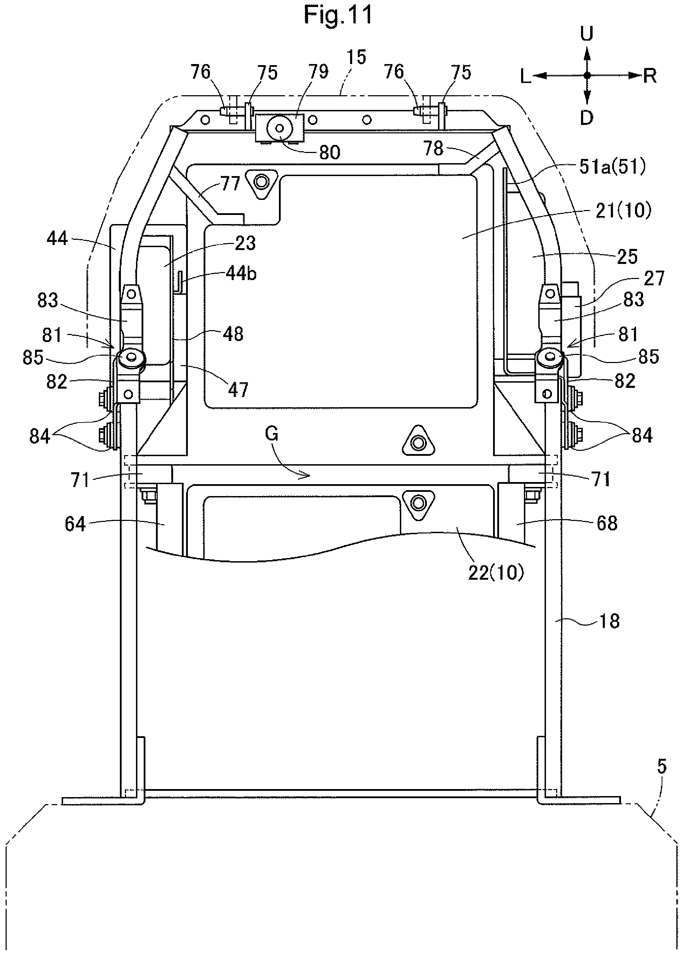

As shown in FIGS. 9 and 10, a pillar frame 18 is provided forward of the steering wheel support mechanism 16. As shown in FIG. 11, the pillar frame 18 is formed in an arch shape (gate shape) in a rear view. The pillar frame 18 is in contact with the housing frame 5 from above and supported by the housing frame 5.

As shown in FIGS. 9 and 11, the electric tractor A includes a shaft support 75 and a shaft member 76. The shaft support 75 is fixed to an upper end portion of the pillar frame 18. The shaft support 75 extends upward from the upper end portion of the pillar frame 18.

The shaft member 76 extends in the left-right direction of the vehicle body. The shaft member 76 is supported by the shaft support 75. Thus, the shaft member 76 is supported by the pillar frame 18 via the shaft support 75. That is, the shaft member 76 is supported by the pillar frame 18. Note that any number of shaft supports 75 and shaft members 76 may be provided.

As shown in FIGS. 1, 9, and 11, the hood 15 is supported by the shaft member 76 so as to be pivotable up and down about the shaft member 76. Thus, the hood 15 is supported by the pillar frame 18 via the shaft member 76 and the shaft support 75. Further, the hood 15 can thereby be opened and closed.

That is, the electric tractor A includes the pillar frame 18 that supports the hood 15. The hood 15 can be opened and closed by being pivoted up and down about the shaft member 76, which extends in the left-right direction of the vehicle body.

As shown in FIGS. 10 and 11, the electric tractor A includes a first battery support 77 and a second battery support 78. The first battery support 77 spans between an upper left portion of the pillar frame 18 and an upper left portion of the upper battery 21. A left end portion of the first battery support 77 is fixed to the upper left portion of the pillar frame 18, for example, by welding or the like. A right end portion of the first battery support 77 is fixed to the upper left portion of the upper battery 21, for example, by bolting or the like.

The second battery support 78 spans between an upper right portion of the pillar frame 18 and an upper right portion of the upper battery 21. A right end portion of the second battery support 78 is fixed to the upper right portion of the pillar frame 18, for example, by welding or the like. A left end portion of the second battery support 78 is fixed to the upper right portion of the upper battery 21, for example, by bolting or the like.

With this configuration, the upper battery 21 is supported by the pillar frame 18 via the first battery support 77 and the second battery support 78. That is, the upper battery 21 is supported by the pillar frame 18.

As shown in FIGS. 9 and 11, the electric tractor A includes a seventh support stay 79 and a second elastic member 80. The seventh support stay 79 is fixed to an upper end portion of the pillar frame 18. The seventh support stay 79 extends rearward from the upper end portion of the pillar frame 18. The second elastic member 80 is attached to a rear end portion of the seventh support stay 79. Although not specifically limited, the second elastic member 80 may be made of, for example, rubber.

As shown in FIG. 9, the second elastic member 80 is in contact with a front end portion (more specifically, a front wall) of the steering wheel support mechanism 16. When the hood 15 is opened and closed, the second elastic member 80 suppresses vibrations of the hood 15 and the pillar frame 18 caused by the opening and closing of the hood 15.

As shown in FIGS. 9 to 11, the electric tractor A includes left and right joint sections 81. Each joint section 81 spans between the pillar frame 18 and a front end portion of the steering wheel support mechanism 16. That is, the electric tractor A includes the joint sections 81 spanning between the pillar frame 18 and the operator section 8.

Each joint section 81 includes a first joint 82, a second joint 83, a third elastic member 84, and a fourth elastic member 85. Although not specifically limited, the third elastic member 84 and the fourth elastic member 85 may be made of, for example, rubber.

The first joint 82 is attached to the pillar frame 18 via the third elastic member 84. The first joint 82 extends rearward from the pillar frame 18.

The second joint 83 is attached to a rear end portion of the first joint 82 via the fourth elastic member 85. The second joint 83 is joined to the front end portion (more specifically, the front wall) of the steering wheel support mechanism 16, for example, by welding, bolting, or the like.

With the above-described configuration, the pillar frame 18 is joined to the operator section 8 via the left and right joint sections 81. Note that the present invention is not limited thereto, and any number of joint sections 81 may be provided.

Vibrations may occur in the operator section 8 in response to an operator boarding and deboarding the operator section 8. The fourth elastic member 85 suppresses the case where vibrations transmitted from the operator section 8 to the second joint 83 are further transmitted from the second joint 83 to the first joint 82. As a result, the transmission of vibrations from the operator section 8 to the pillar frame 18 is suppressed.

The third elastic member 84 suppresses the case where vibrations transmitted from the operator section 8 to the first joint 82 via the second joint 83 are transmitted from the first joint 82 to the pillar frame 18. As a result, the transmission of vibrations from the operator section 8 to the pillar frame 18 is suppressed.

In this manner, each joint section 81 includes the third elastic member 84 and the fourth elastic member 85 that suppress the transmission of vibrations from the operator section 8 to the pillar frame 18.

### [First Cooling Path]

As shown in FIGS. 3 and 4, the electric tractor A includes the first pump 86 and the second pump 87. The first pump 86 and the second pump 87 are both disposed below the lower battery 22.

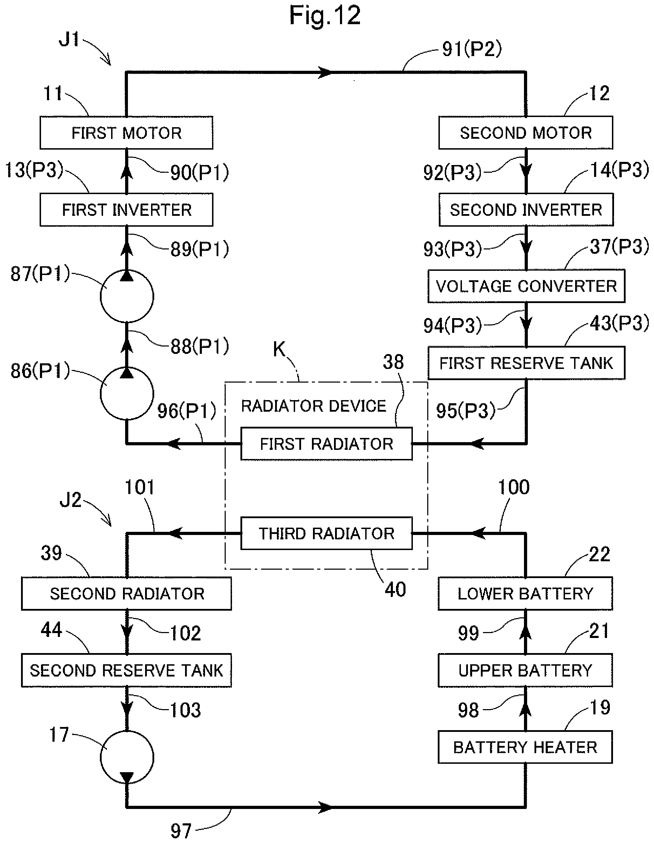

As shown in FIG. 12, the first pump 86 and the second pump 87 are included in the first cooling path J1. The first pump 86 and the second pump 87 may be configured to be driven, for example, by electric power supplied from the second battery 27. The first pump 86 and the second pump 87 pump the first coolant.

The first cooling path J1 includes the first inverter 13, the first motor 11, the second motor 12, the second inverter 14, the voltage converter 37, the first reserve tank 43, and the first radiator 38.

That is, the voltage converter 37 is included in the first cooling path J1. The first motor 11 is also included in the first cooling path J1. The second motor 12 is also included in the first cooling path J1.

Further, the first cooling path J1 includes a first path P1, a second path P2, and a third path P3. The first path P1 connects the first radiator 38 and the first motor 11. In the first path P1, the first coolant flows from the first radiator 38 toward the first motor 11.

The second path P2 connects the first motor 11 and the second motor 12. In the second path P2, the first coolant flows from the first motor 11 toward the second motor 12.

The third path P3 connects the second motor 12 and the first radiator 38. In the third path P3, the first coolant flows from the second motor 12 toward the first radiator 38.

That is, the first cooling path J1 includes the first radiator 38 that cools the first coolant, the first path P1 through which the first coolant flows from the first radiator 38 toward the first motor 11, the second path P2 through which the first coolant flows from the first motor 11 toward the second motor 12, and the third path P3 through which the first coolant flows from the second motor 12 toward the first radiator 38.

The first path P1 will be described in detail. The first path P1 includes a first hose 96, the first pump 86, a second hose 88, the second pump 87, a third hose 89, the first inverter 13, and a fourth hose 90. That is, the first inverter 13 is included in the first path P1.

The first hose 96 connects the first radiator 38 and the first pump 86. The second hose 88 connects the first pump 86 and the second pump 87. The third hose 89 connects the second pump 87 and the first inverter 13. The fourth hose 90 connects the first inverter 13 and the first motor 11.

As shown in FIGS. 3, 4, and 13, a portion of the first hose 96 and a portion of the third hose 89 are located below the upper battery 21 and the lower battery 22. Further, the first pump 86, the second hose 88, and the second pump 87 are located below the upper battery 21 and the lower battery 22. In this manner, at least a portion of the first path P1 is located below the first battery 10. Note that only a portion of the first path P1 may be located below the first battery 10, or the entire first path P1 may be located below the first battery 10.

The second path P2 will be described in detail. As shown in FIG. 12, the second path P2 is constituted by a fifth hose 91. The fifth hose 91 connects the first motor 11 and the second motor 12.

The third path P3 will be described in detail. The third path P3 includes a sixth hose 92, the second inverter 14, a seventh hose 93, the voltage converter 37, an eighth hose 94, the first reserve tank 43, and a ninth hose 95. That is, the second inverter 14 is included in the third path P3.

As shown in FIGS. 3, 4, and 13, a portion of the seventh hose 93 and a portion of the eighth hose 94 are located to the right of the lower battery 22. Further, a portion of the eighth hose 94 is located to the right of the upper battery 21. The voltage converter 37 is located to the right of the lower battery 22.

Thus, at least a portion of the third path P3 is located to the right of the first battery 10. Note that the present invention is not limited thereto. For example, the arrangement of the seventh hose 93, the eighth hose 94, and the voltage converter 37 may be reversed in the left-right direction. That is, at least a portion of the third path P3 is located to the left or right of the first battery 10. Note that only a portion of the third path P3 may be located to the left or right of the first battery 10, or the entire third path P3 may be located to the left or right of the first battery 10.

As shown in FIG. 12, the first pump 86 and the second pump 87 are connected in series by the second hose 88. The first coolant pumped by the first pump 86 and the second pump 87 flows through the third hose 89, the first inverter 13, the fourth hose 90, the first motor 11, the fifth hose 91, the second motor 12, the sixth hose 92, the second inverter 14, the seventh hose 93, the voltage converter 37, the eighth hose 94, the first reserve tank 43, the ninth hose 95, the first radiator 38, and the first hose 96 in this order, and returns to the first pump 86 and the second pump 87.

Note that illustration of the ninth hose 95 is omitted in FIGS. 3, 4, and 13. Instead of providing the ninth hose 95, the first reserve tank 43 and the first radiator 38 may be directly connected to each other.

### [Second Cooling Path]

As shown in FIGS. 3 and 4, the electric tractor A includes a third pump 17 and a battery heater 19. The third pump 17 is disposed below the radiator device K and the second radiator 39. The battery heater 19 is disposed below the lower battery 22.

As shown in FIG. 12, the third pump 17 and the battery heater 19 are included in the second cooling path J2. The third pump 17 may be, for example, configured to be driven by electric power supplied from the second battery 27. The third pump 17 pumps the second coolant.

The battery heater 19 may be, for example, configured to be driven by electric power supplied from the second battery 27. The battery heater 19 heats the second coolant while the upper battery 21 and the lower battery 22 are in a low-temperature state.

The second cooling path J2 includes the upper battery 21, the lower battery 22, the third radiator 40, the second radiator 39, and the second reserve tank 44. That is, the first battery 10 is included in the second cooling path J2.

Further, the second cooling path J2 includes a tenth hose 97, an eleventh hose 98, a twelfth hose 99, a thirteenth hose 100, a fourteenth hose 101, a fifteenth hose 102, and a sixteenth hose 103.

The tenth hose 97 connects the third pump 17 and the battery heater 19. The eleventh hose 98 connects the battery heater 19 and the upper battery 21. The twelfth hose 99 connects the upper battery 21 and the lower battery 22. The thirteenth hose 100 connects the lower battery 22 and the third radiator 40. The fourteenth hose 101 connects the third radiator 40 and the second radiator 39. The fifteenth hose 102 connects the second radiator 39 and the second reserve tank 44. The sixteenth hose 103 connects the second reserve tank 44 and the third pump 17.

As shown in FIGS. 3, 4, and 13, a portion of the fifteenth hose 102 and a portion of the sixteenth hose 103 are located to the left of the upper battery 21. Further, a portion of the sixteenth hose 103 is located to the left of the lower battery 22. The second reserve tank 44 is located to the left of the upper battery 21.

Thus, at least a portion of the second cooling path J2 is located to the left of the first battery 10. Note that the present invention is not limited thereto. For example, the arrangement of the fifteenth hose 102, the sixteenth hose 103, and the second reserve tank 44 may be reversed in the left-right direction.

With the above-described configuration, at least a portion of the first cooling path J1 (more specifically, the third path P3) passes through one of the left and right sides (the right side in the present embodiment) of the first battery 10. Further, at least a portion of the second cooling path J2 passes through the other one of the left and right sides (the left side in the present embodiment) of the first battery 10.

Note that only a portion of the first cooling path J1 may pass through one of the left and right sides of the first battery 10, or the entire first cooling path J1 may pass through one of the left and right sides of the first battery 10. Further, only a portion of the second cooling path J2 may pass through the other one of the left and right sides of the first battery 10, or all of the portions of the second cooling path J2 excluding the first battery 10 may pass through the other one of the left and right sides of the first battery 10.

As shown in FIG. 12, the second coolant pumped by the third pump 17 flows through the tenth hose 97, the battery heater 19, the eleventh hose 98, the upper battery 21, the twelfth hose 99, the lower battery 22, the thirteenth hose 100, the third radiator 40, the fourteenth hose 101, the second radiator 39, the fifteenth hose 102, the second reserve tank 44, and the sixteenth hose 103 in this order, and returns to the third pump 17.

As shown in FIG. 12, the first cooling path J1 and the second cooling path J2 are not in communication with each other. That is, the first cooling path J1 and the second cooling path J2 are independent of each other.

According to the above-described configuration, the support mechanism W supports the first battery 10. Further, the support mechanism W also supports the electrical components N. This configuration facilitates securing a larger space for disposing the first battery 10 compared to the case where a mechanism for supporting the first battery 10 and a mechanism for supporting the electrical components N are separately provided. As a result, a first battery 10 having a relatively large size can be mounted.

That is, according to the above-described configuration, it is possible to realize the electric tractor A in which the first battery 10 having a relatively large capacity is mounted.

According to the above-described configuration, the plurality of electrical components N are disposed in a distributed manner on the left and right sides of the first battery 10. This improves weight balance in the left-right direction of the vehicle body compared to the case where the plurality of electrical components N are disposed in a concentrated manner on the left or right side of the first battery 10.

Further, the positions of the plurality of electrical components N are likely to be lower than in the case where the plurality of electrical components N are disposed in a concentrated manner above the first battery 10. This lowers the center of gravity of the vehicle body. As a result, stability of the vehicle body is improved.

Further, the positions of the plurality of electrical components N are likely to be higher than in the case where the plurality of electrical components N are disposed in a concentrated manner below the first battery 10. Thus, mud water or the like coming from the ground is less likely to adhere to the plurality of electrical components.

That is, according to the above-described configuration, the electric tractor A can be realized in which the plurality of electrical components N are suitably arranged.

### [Variations of First Embodiment]

Variations of the above embodiment will be described below. Matters other than those described in the following variations are the same as those described in the above embodiment.

### [First Variation]

In the first cooling path J1 of the above embodiment, the first coolant circulates in the directions shown in FIG. 12.

However, the present invention is not limited thereto. The following description of a first variation according to the present invention will focus differences from the above embodiment. Components other than those described below are the same as those of the above embodiment. Components having the same configurations as those of the above embodiment are denoted by the same reference numerals.

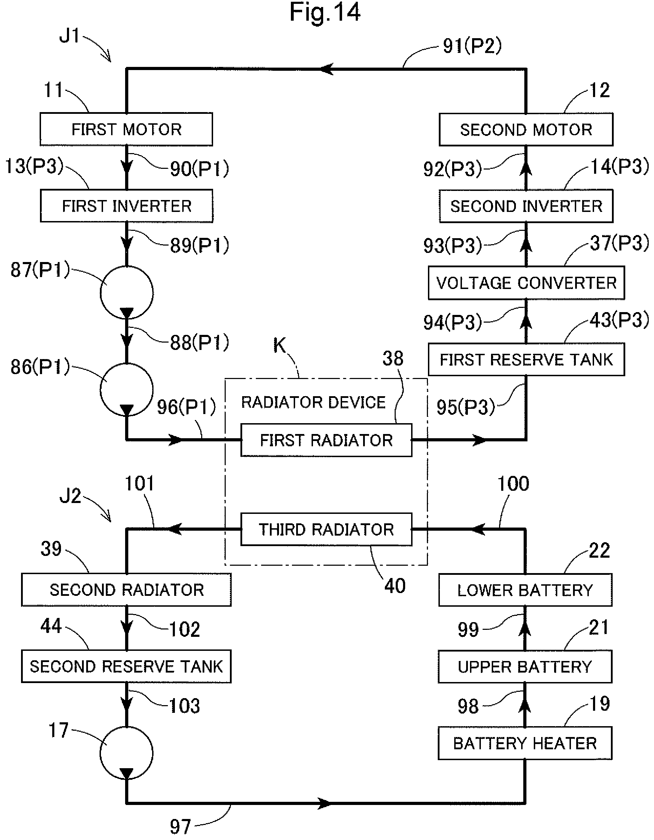

In the first cooling path J1 of the first variation according to the present invention, the direction in which the first pump 86 and the second pump 87 pump the first coolant is opposite to that of the above embodiment. Thus, the first coolant circulates in the direction shown in FIG. 14.

Specifically, in the first path P1, the first coolant flows from the first motor 11 toward the first radiator 38. In the second path P2, the first coolant flows from the second motor 12 toward the first motor 11. In the third path P3, the first coolant flows from the first radiator 38 toward the second motor 12.

That is, the first cooling path J1 includes the first radiator 38 that cools the first coolant, the first path P1 through which the first coolant flows from the first motor 11 toward the first radiator 38, the second path P2 through which the first coolant flows from the second motor 12 toward the first motor 11, and the third path P3 through which the first coolant flows from the first radiator 38 toward the second motor 12.

Further, the circulation direction of the first coolant may be switchable between the direction shown in FIG. 12 and the direction shown in FIG. 14 in accordance with a predetermined manual operation performed by an operator or automatically. That is, the circulation direction of the first coolant may be changeable.

### [Other Variations]

(1) The arrangement of some or all of the members may be reversed in the left-right direction.
(2) The electric tractor A may include an engine and be configured as a hybrid type.
(3) The number of first batteries 10 provided may be one.
(4) The second motor 12 may be omitted.
(5) The second support S2 may support any number of electrical components N.
(6) The support frames 58 need not necessarily be disposed along the side walls of the lower battery 22.
(7) The lower battery 22 need not necessarily be disposed at a position sandwiched between the left and right support frames 58.
(8) The plurality of first batteries 10 may be arranged next to each other in the left-right direction or in the front-rear direction.
(9) The gap G need not necessarily be present between the plurality of first batteries 10.
(10) The second battery 27 may be omitted.
(11) The voltage converter 37 and the junction box 24 may be disposed in a concentrated manner on the left or right side of the first battery 10.
(12) At least either the voltage converter 37 or the junction box 24 may be disposed above the lower end position of the first battery 10 on the upper side.
(13) The first cooling path J1 and the second cooling path J2 may communicate with each other. Further, in the electric tractor A, only one path in which a coolant circulates may be provided.
(14) The plurality of electrical components N may be disposed in a concentrated manner above or below the lower end position of the first battery 10 on the upper side.

Note that the configurations disclosed in the above embodiments (including the variations; the same applies hereinafter) can be applied in combination with configurations disclosed in other embodiments as long as no contradiction arises. Further, the embodiments disclosed herein are illustrative. Embodiments of the present invention are not limited thereto, and various modifications can be made without departing from the object of the present invention.

### [Second Embodiment]

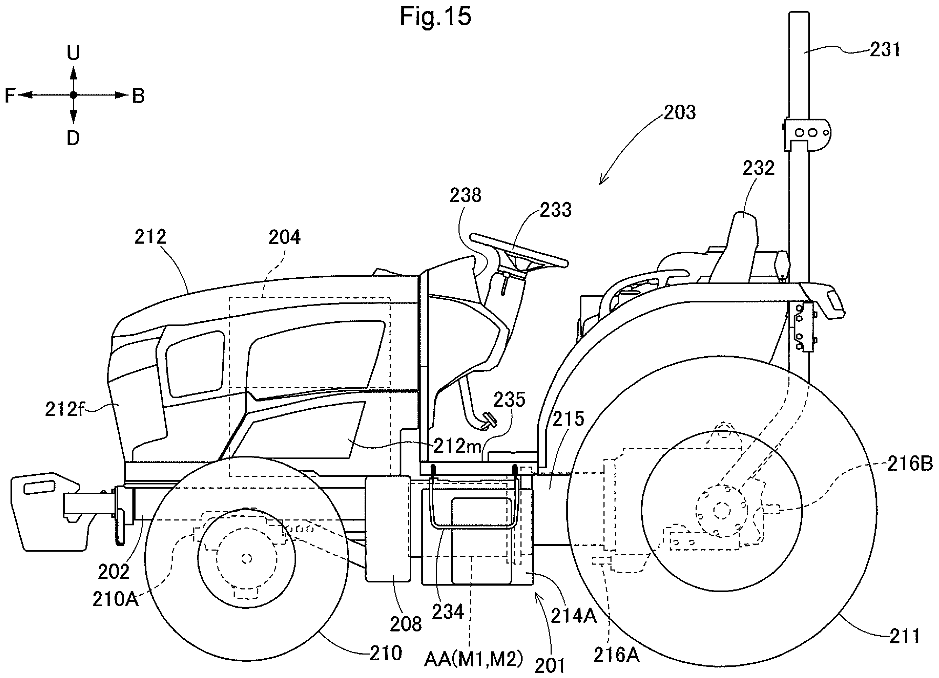

A mode for carrying out the present invention will be described with reference to the drawings. More specifically, the second embodiment will be described mainly with reference to FIGS. 15 to 21. In the following description, constituent components denoted by the same reference numerals as those of the first embodiment are the same as those of the first embodiment, and detailed description thereof is omitted.

An embodiment illustrating an electric tractor of the present invention will be described based on an electric tractor shown in FIGS. 15 to 21. In FIGS. 15 to 21, "F" indicates a front direction, "B" indicates a rear direction, "U" indicates an upward direction, "D" indicates a downward direction, "R" indicates a right direction, and "L" indicates a left direction.

### [Overall Configuration of Electric Tractor]

As shown in FIGS. 15 to 17, left and right front wheels 210 are provided at front portions of a vehicle body 201, and left and right rear wheels 211, which are rear travel devices, are provided at rear portions of the vehicle body 201. The vehicle body 201 supports the front wheels 210 and the rear wheels 211.

The vehicle body 201 includes a front frame 202, a housing frame AA, and a transmission case 215. The front frame 202 is joined to a front portion of the housing frame AA, and the transmission case 215 is joined to a rear portion of the housing frame AA, thereby constituting a frame structure of the vehicle body 201. The housing frame AA houses an electric motor M1 and an electric motor M2 as motive power sources.

A front axle case 210A is attached to the front frame 202, and the left and right front wheels 210 are attached to the front axle case 210A. The left and right front wheels 210 are supported by the front axle case 210A. The front axle case 210A extends along the left-right direction. The front axle case 210A supports the left and right front wheels 210 and houses an axle that transmits motive power to the left and right front wheels 210. The front frame 202 supports the front axle case 210A. Each of the front wheels 210 and the front axle case 210A are an example of a "travel device".

The transmission case 215 includes an axle case that transmits motive power to the left and right rear wheels 211. Accordingly, the transmission case 215 supports the left and right rear wheels 211. The left and right rear wheels 211 are attached to the transmission case 215. The transmission case 215 supports the left and right rear wheels 211.

An operator section 203 in which an operator rides is provided above the housing frame AA and the transmission case 215. A ROPS frame 231 is attached to the transmission case 215 and extends upward, and is provided at a rear portion of the operator section 203. A battery 204 that supplies electric power to the electric motors M1 and M2 is attached to the front frame 202, and a hood 212 that covers the battery 204 is provided. The hood 212 corresponds to a "cover member".

The battery 204 is placed and supported on the front frame 202. In other words, the front frame 202 supports the battery 204 from below. The front frame 202 is used for both supporting the battery 204 and supporting the front axle case 210A of the front wheels 210. The battery 204 is located above the front frame 202. The battery 204 stores electric power for travel, work, and hydraulic drive.

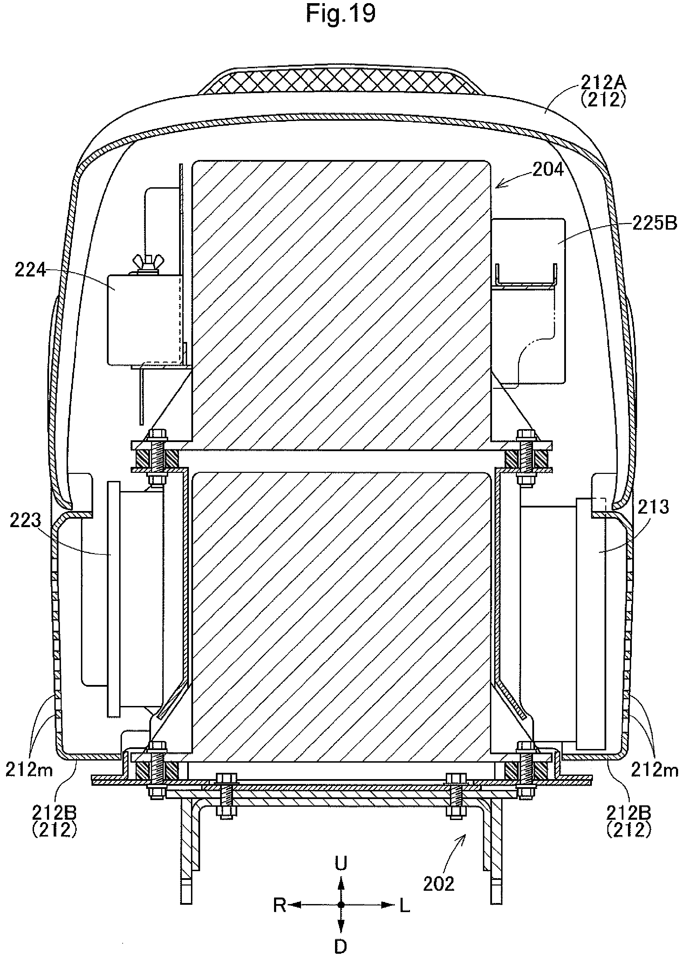

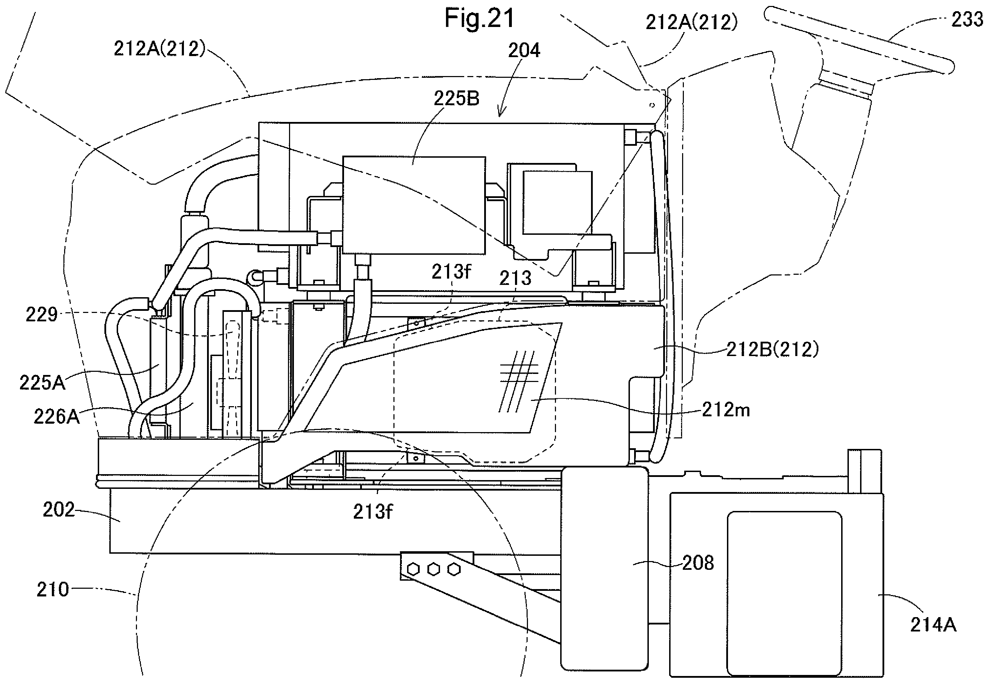

As shown in FIGS. 19 and 21, the hood 212 includes a pivotable portion 212A that pivots to enable opening and closing of the hood 212, and a fixed portion 212B fixed below the pivotable portion 212A. The hood 212 can be opened and closed due to the pivotable portion 212A being pivotable about a horizontal axis along the left-right direction of the vehicle body. The battery 204 is covered by the hood 212 while the pivotable portion 212A is closed.

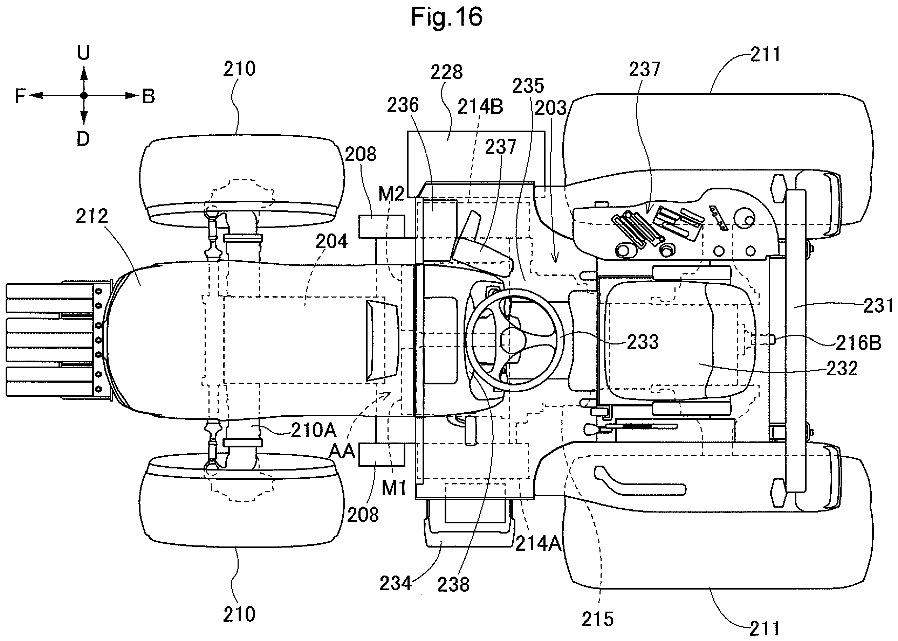

The electric tractor of the present embodiment has two independent drive systems, namely a drive system for travel and a drive system for work. Specifically, as shown in FIG. 16, the electric tractor includes an electric motor M1 for travel and an electric motor M2 for work and hydraulic drive. Further the electric tractor includes two inverters 214A and 214B corresponding to the two electric motors M1 and M2. The two electric motors M1 and M2 are disposed rearward of the battery 204 in the vehicle body. The electric motor M1 is a motor for travel that is driven by receiving supply of electric power from the battery 204. The electric motor M2 is a motor for work and hydraulic drive that is driven by receiving supply of electric power from the battery 204. The inverters 214A and 214B are provided laterally outward of the electric motors M1 and M2 in the vehicle body. The electric motor M1 corresponds to a "first electric motor". The electric motor M2 corresponds to a "second electric motor".

The battery 204 supplies electric power to the two inverters 214A and 214B. Each of the inverters 214A and 214B receives DC power from the battery 204 and converts the received DC power into three-phase AC power. The left inverter 214A converts DC power from the battery 204 into AC power and supplies the AC power to the electric motor M1. The electric motor M1 thereby operates. The right inverter 214B converts DC power from the battery 204 into AC power and supplies the AC power to the electric motor M2, thereby operating the electric motor M2.

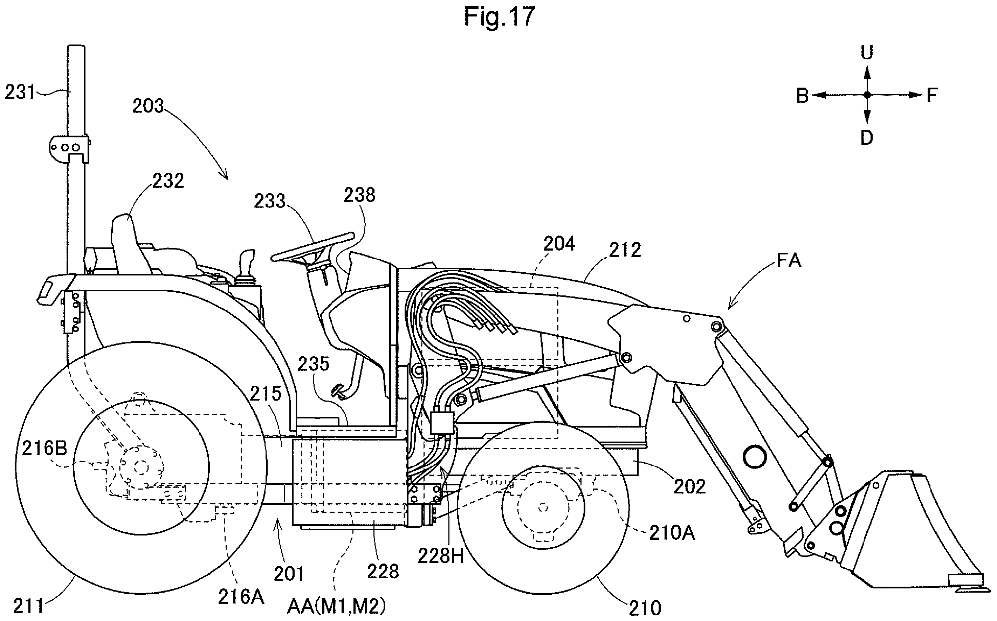

Left and right loader attachment sections 208 are joined respectively to left and right side portions of the housing frame AA. A work device such as a front loader FA (see FIG. 17) is attached to the left and right loader attachment sections 208. The left and right loader attachment sections 208 support the work device such as the front loader FA in an attachable and detachable manner. The front loader FA is an example of a "hydraulic drive device".

A valve unit 228 for hydraulic piping is adjacent to the inverter 214B laterally outward relative to the vehicle body, and is adjacent, on the rear side relative to the vehicle body, to the loader attachment section 208 on the right side of the vehicle body. The valve unit 228 for hydraulic piping is joined to and supported by the housing frame AA. A hydraulic piping connector is provided at a base end portion of a right arm of the front loader FA. Hydraulic piping 228H extending from the valve unit 228 is connected to the hydraulic piping connector of the front loader FA. That is, the valve unit 228 is capable of connecting a hydraulic system to a hydraulic mechanism of the front loader FA when the front loader FA is attached to the loader attachment section 208. Note that, in the case where a backhoe is attached to a rear portion of the vehicle body 201, the valve unit 228 may be capable of connecting the hydraulic system to a hydraulic mechanism of the backhoe.

### [Configuration of Operator Section]

As shown in FIGS. 15 to 17, the operator section 203 is provided rearward of the battery 204 and the hood 212. The operator section 203 includes a ROPS frame 231, an operator seat 232, a steering wheel 233 for steering the front wheels 210, a step 234, a floor 235, a charging socket 236, a work-travel operation tool 237, a display section 238, and the like.

The operator section 203 is supported by a housing frame AA and a transmission case 215. The electric motors M1 and M2 are arranged side by side in the left-right direction below the floor 235 of the operator section 203, inside the housing frame AA.

The step 234 for an operator to step is attached to a right portion of the floor 235, and the operator (rider) mainly boards and deboards the operator section 203 from the left side of the vehicle body 201. The operator can step onto the floor 235 of the operator section 203 from the step 234 and sit on the operator seat 232. The left and right front wheels 210 are steered in response to the operator operating the steering wheel 233.

Although not described in detail, the work-travel operation tool 237 includes an accelerator operation tool for adjusting the travel speed, and an operation tool for adjusting the rotational speeds of a mid PTO shaft 216A and a rear PTO shaft 216B, which will be described later. Thus, the operator can perform various traveling operations in the operator section 203. Note that the work-travel operation tool 237 includes a potentiometer that detects an operation amount of each operation tool.

The display section 238 displays, for example, a traveling state of the vehicle body, a working state, information of the battery 204 (such as a charging amount and a temperature), and the like.

The charging socket 236 is provided to the right of the steering wheel 233 and immediately above the floor 235. The battery 204 is charged in response to an operator or the like inserting an adapter of a charger into the charging socket 236. The charging socket 236 receives input electric power for charging the battery 204. The standard for the charging socket 236 may be, for example, CHAdeMO, CCS2, GB/T, ChaoJi, NACS, or the like.

The housing frame AA, the electric motors M1 and M2, the inverters 214Aand 214B, and the transmission case 215 are disposed below the floor 235. The battery 204 is disposed above the floor 235. In addition, the battery 204 is provided on the front side of the operator section 203 such that a rear end portion of the battery 204 is located on the front side of front end portions of the electric motors M1 and M2.

### [Configuration of Power Transmission Device]

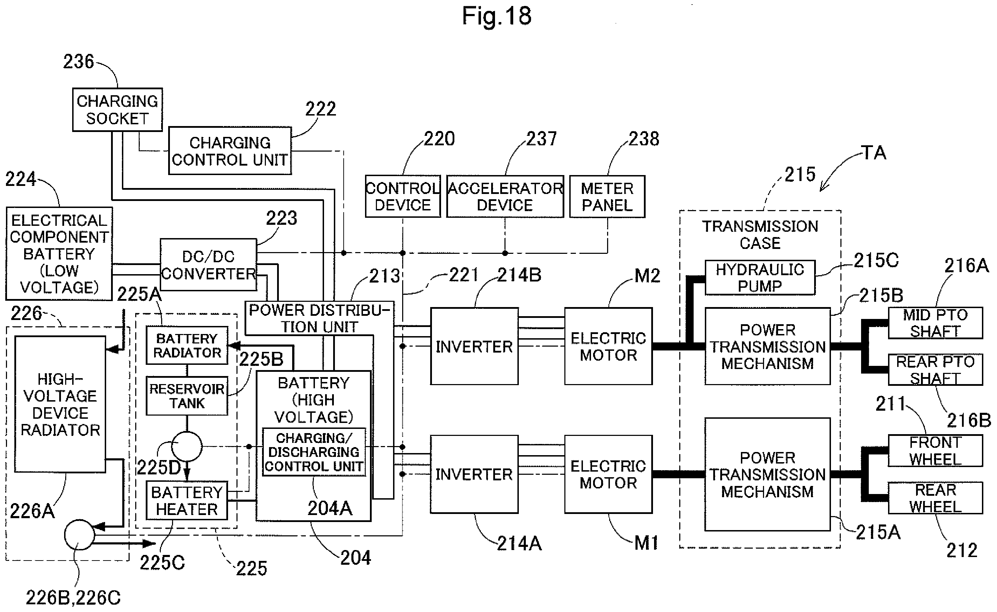

As shown in FIG. 18, a power transmission device TA includes a travel power transmission mechanism 215A, a work power transmission mechanism 215B, and a hydraulic pump 215C. The transmission case 215 houses the travel power transmission mechanism 215A, the work power transmission mechanism 215B, and the hydraulic pump 215C. That is, the power transmission device TA includes the transmission case 215, the travel power transmission mechanism 215A, the work power transmission mechanism 215B, and the hydraulic pump 215C.

The travel power transmission mechanism 215A receives rotational motive power from the electric motor M1 and transmits the rotational motive power to the left and right front wheels 210 and the left and right rear wheels 211 while shifting the rotational motive power using a gear-type transmission mechanism. The left and right front wheels 210 and the left and right rear wheels 211 are thereby driven to rotate by motive power for travel from the electric motor M1. That is, the travel power transmission mechanism 215A transmits motive power for travel from the electric motor M1 to the front wheels 210 and the rear wheels 211. In other words, the left and right front wheels 210 and the left and right rear wheels 211 are driven based on electric power for travel.

The electric tractor also includes the mid PTO shaft 216A and the rear PTO shaft 216B. The work power transmission mechanism 215B receives rotational motive power from the electric motor M2 and distributes the rotational motive power to the mid PTO shaft 216A and the rear PTO shaft 216B. The mid PTO shaft 216A and the rear PTO shaft 216B are thereby driven to rotate.

If a work device is connected to at least either the mid PTO shaft 216A or the rear PTO shaft 216B, the work device is driven by the rotational motive power from the mid PTO shaft 216A and the rear PTO shaft 216B. That is, the work power transmission mechanism 215B transmits motive power for work from the electric motor M2 to the mid PTO shaft 216A and the rear PTO shaft 216B. The mid PTO shaft 216A and the rear PTO shaft 216B then supply motive power for work to the work device.

The hydraulic pump 215C receives rotational motive power from the electric motor M2 and is driven to rotate. The hydraulic pump 215C is a driving source of a hydraulic system in the electric tractor. Therefore, when a front loader FA is attached to the tractor, hydraulic oil is pumped by the hydraulic pump 215C. Then, the front loader FA operates based on hydraulic pressure of the hydraulic oil. That is, the hydraulic pump 215C supplies hydraulic pressure for work to the work device. In other words, the front loader FA is driven based on driving of the electric motor M2. Note that the hydraulic pump 215C also pumps hydraulic oil for driving work devices connected to the mid PTO shaft 216A and the rear PTO shaft 216B to move up and down.

In this manner, the power transmission device TA is used in common for motive power transmission for travel, motive power transmission for work, and hydraulic drive. That is, the power transmission device TA includes the travel power transmission mechanism 215A that transmits motive power from the electric motor M1 to the front wheels 210 and the rear wheels 211, the work power transmission mechanism 215B that transmits motive power from the electric motor M2 to the mid PTO shaft 216A and the rear PTO shaft 216B, and the hydraulic pump 215C for hydraulic drive. Further, the power transmission device TA is disposed rearward of the electric motor M1 and the electric motor M2.

The work device to be connected to the mid PTO shaft 216A may be, for example, a mowing device, a rotary rake, a leaf cutting device, a spraying device, or the like. Further, the mid PTO shaft 216A may be used as a front PTO shaft for a work device attached to a front portion of the vehicle body 201. A work device to be connected to the rear PTO shaft 216B may be a cultivator, a seeding device, a planter, a fertilizing device, a leaf cutting device, a spraying device, a mowing device, a baler, a mulcher, a stone picker, a rotary rake, a tedder, a towed harvesting and sorting device, a topping device, an intertillage management device, a ridging device, or the like.

### [Drive System of Electric Tractor]

As shown in FIG. 18, a control device 220 is provided that controls driving of the electric motors M1 and M2 in accordance with operation of the work-travel operation tool 237. The control device 220 is a core element of a control system of the electric tractor and is configured as an assembly of a plurality of ECUs.

The control device 220 is connected, for example, via a controller area network (CAN) signal harness 221 to a charging/discharging control unit 204A of the battery 204, the inverters 214A and 214B, the electric motors M1 and M2, a charging control unit 222, a DC/DC converter 223, the work-travel operation tool 237, the display section 238, and the like such that data can be communicated therebetween.

The control device 220 outputs command signals to the inverters 214A and 214B in accordance with commands from the work-travel operation tool 237. The inverter 214A adjusts three-phase AC electric power (voltage value, frequency, current value, etc.) supplied from the battery 204 to the electric motor M1 in accordance with command signals from the control device 220, thereby controlling output of the electric motor M1. Similarly, the inverter 214B adjusts three-phase AC electric power supplied from the battery 204 to the electric motor M2 in accordance with command signals from the control device 220, thereby controlling output of the electric motor M2.

The control device 220 controls operation of the display section 238. Thus, the display section 238 displays operation status of the electric motors M1 and M2, information of the battery 204, and the like.

The battery 204 is, for example, a lithium-ion battery. Although not shown, the battery 204 is constituted by a large number of low-voltage small unit cells in a stacked state. The output voltage of the battery 204 is, for example, 400 volts. The unit cells are stored in a storage case. The unit cells are sealed by the storage case.

The battery 204 is electrically connected to a power distribution unit 213. The power distribution unit 213 is also electrically connected to the inverters 214A and 214B and the DC/DC converter 223. Thus, the power distribution unit 213 functions as a hub that distributes electric power from the battery 204 to the inverters 214A and 214B and the DC/DC converter 223. Therefore, the power distribution unit 213 distributes electric power from the battery 204 to the electric motor M1 and the electric motor M2. The power distribution unit 213 corresponds to a "distribution unit".

Further, the power distribution unit 213 is also connected to the charging socket 236 via the charging control unit 222. The power distribution unit 213 is configured to receive charging electric power from the charging socket 236 and supply the charging electric power to the battery 204.

The battery 204 includes the charging/discharging control unit 204A. The charging/discharging control unit 204A is configured to control a discharging current, a charging current, and the like of the battery 204 based on an output voltage, a received voltage, a heat generation temperature, and the like of the battery 204.

The battery 204 outputs large electric power to the inverters 214A and 214B, and thus the amount of heat generated by the battery 204 is also large. In addition, temperature management for appropriately managing the charged amount and discharged amount of the battery 204 is also important. For this reason, a water-cooled temperature adjustment flow path is implemented inside the battery 204. A battery temperature adjustment device 225 for supplying a liquid coolant to this temperature adjustment flow path is provided in the vicinity of the battery 204.

The battery temperature adjustment device 225 includes a battery radiator 225A, a reservoir tank 225B, a battery heater 225C, and a pump 225D. A coolant is stored in the reservoir tank 225B. The pump 225D pumps the coolant for cooling the battery 204. The battery heater 225C raises the temperature of the battery 204 by heating the coolant. Upon the pump 225D operating, the coolant circulates from the reservoir tank 225B to the battery heater 225C, the pump 225D, the temperature adjustment flow path inside the battery 204, and the battery radiator 225A in this order. Thus, the battery temperature adjustment device 225 is configured to adjust the temperature of the battery 204.

The battery heater 225C is provided between the pump 225D and an inlet of the temperature adjustment flow path inside the battery 204. While the temperature of the battery 204 is low, the charging and discharging current of the battery 204 is small. When the electric tractor is started in such a state, the charging/discharging control unit 204A operates the battery heater 225C to heat the coolant. This rapidly increases the temperature of the battery 204 to a temperature suitable for charging and discharging.

The battery radiator 225A is provided between an outlet of the temperature adjustment flow path inside the battery 204 and the reservoir tank 225B. Thus, the coolant heated in the temperature adjustment flow path inside the battery 204 is cooled by heat dissipation in the battery radiator 225A and returned to the reservoir tank 225B.

The charging control unit 222 has a circuit that is electrically connected to the charging socket 236 and the power distribution unit 213. The charging control unit 222 may be, for example, a power module or a programmable logic controller (PLC) having a microcomputer that executes a program based on a control signal from the control device 220, or may be a relay circuit that operates based on an electric signal from the control device 220. The charging control unit 222 controls a charging voltage and a charging current for the battery 204 when charging the battery 204 (including rapid charging). The charging control unit 222 adjusts received electric power from the charging socket 236 and supplies the adjusted electric power as charging electric power to the battery 204.

In addition to the battery 204, the electric tractor includes an electrical component battery 224 that supplies electric power to the control device 220 and other electrical components. The electrical component battery 224 is, for example, a lead battery. The electrical component battery 224 supplies low-voltage (e.g., 12-volt) electric power for driving the electrical components. The output voltage of the electrical component battery 224 is lower than the output voltage of the battery 204.

The electrical component battery 224 is charged with electric power supplied from the battery 204 via the DC/DC converter 223. The DC/DC converter 223 is capable of stepping down the voltage of the battery 204 to the voltage of the electrical component battery 224 and thereafter supplying electric power to low-voltage electrical components. The DC/DC converter 223 is also capable of supplying electric power to the electrical component battery 224. That is, the DC/DC converter 223 is electrically connectable to the battery 204 and the electrical component battery 224, and is capable of receiving electric power from the battery 204, stepping down the voltage, and supplying electric power to the electrical component battery 224. Accordingly, the battery 204 is capable of supplying electric power to the electrical component battery 224 and charging the electrical component battery 224. In other words, the electrical component battery 224 can be charged with electric power received from the battery 204 via the DC/DC converter 223.

High-power devices that receive electric power from the battery 204 at high voltage tend to become high in temperature due to heat generation. To address this, the electric tractor includes a high-voltage device cooling device 226 for cooling the high-power devices. The high-voltage device cooling device 226 includes a high-voltage device radiator 226A and pumps 226B and 226C. The pumps 226B and 226C are connected in series. The pumps 226B and 226C pump a coolant for cooling high-power devices that operate based on electric power, such as the inverters 214A and 214B, the electric motors M1 and M2, and the DC/DC converter 223. Upon the pumps 226B and 226C operating, the coolant flows through cooling paths in the high-power devices such as the inverters 214A and 214B, the electric motors M1 and M2, and the DC/DC converter 223, thereby cooling these high-power devices. The coolant heated by the high-power devices is cooled by heat dissipation in the high-voltage device radiator 226A. Note that the order of the cooling paths in the high-power devices can be changed as appropriate.

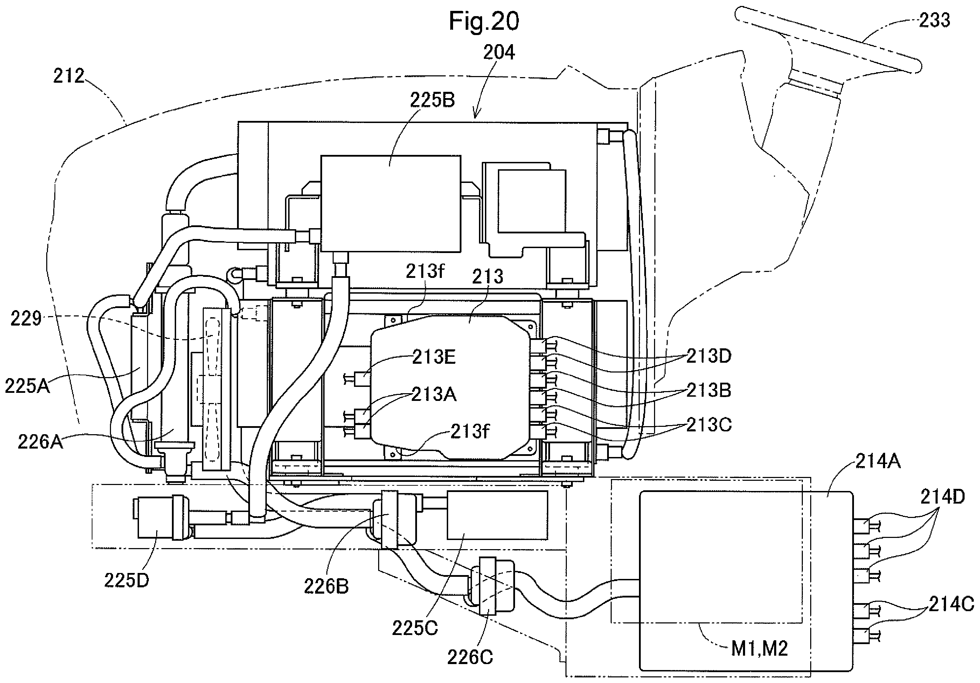

As shown in FIGS. 20 and 21, the high-voltage device radiator 226A and the battery radiator 225A are arranged in the front-rear direction, forward of the battery 204. A cooling fan 229 is provided rearward of the high-voltage device radiator 226A and the battery radiator 225A and forward of the battery 204. The cooling fan 229 generates cooling air for cooling the coolant in the high-voltage device radiator 226A and the battery radiator 225A. A front grill 212f (see FIG. 15) is provided at a front portion of the hood 212, and outside air is introduced as cooling air from the front of the battery radiator 225A. The cooling fan 229 is configured to generate cooling air that flows rearward. The cooling air promotes heat dissipation from the battery radiator 225A and the high-voltage device radiator 226A.

### [Shape and Arrangement of Power Distribution Unit]

As shown in FIGS. 19 to 21, the battery 204 in the present embodiment is configured by stacking two casings in the up-down direction. Each of these two casings is formed in a rectangular parallelepiped shape extending along the front-rear direction and has a right side surface portion and a left side surface portion that extend in planar shapes along the up-down direction and the front-rear direction. The power distribution unit 213 is disposed adjacent to a side surface portion of the battery 204 that extends in the up-down direction.

Specifically, the power distribution unit 213 is supported by a left side surface portion of the lower casing of the two casings of the battery 204.

In addition to the power distribution unit 213, the reservoir tank 225B, the DC/DC converter 223, the electrical component battery 224, and the like are supported by left and right side surface portions of the battery 204. The reservoir tank 225B is disposed on a side surface portion of the battery 204 on the side in the left-right direction where the power distribution unit 213 is located, above the power distribution unit 213 in the up-down direction. The DC/DC converter 223 is supported by a right side surface portion of the battery 204. The electrical component battery 224 is supported by a right side surface portion of the battery 204, above the DC/DC converter 223. The DC/DC converter 223 and the electrical component battery 224 are supported by side surface portions of the battery 204 on the opposite side in the left-right direction to the side where the power distribution unit 213 is located.

A first electrical connection port 213A and a fifth electrical connection port 213E are provided at front portions of the power distribution unit 213. A second electrical connection port 213B, a third electrical connection port 213C, and a fourth electrical connection port 213D are provided at rear portions of the power distribution unit 213. A power cable on the battery 204 side is connected to the first electrical connection port 213A. A power cable on the electric motor M1 side is connected to the second electrical connection port 213B. A power cable on the electric motor M2 side is connected to the third electrical connection port 213C. A power cable on the charging control unit 222 side (charging socket 236 side) is connected to the fourth electrical connection port 213D. A power cable on the DC/DC converter 223 side is connected to the fifth electrical connection port 213E. Each of the first electrical connection port 213A, the second electrical connection port 213B, the third electrical connection port 213C, the fourth electrical connection port 213D, and the fifth electrical connection port 213E is configured as a pair of connection ports consisting of a positive electrode and a negative electrode.

As shown in FIG. 20, the electric motors M1 and M2 and the inverters 214A and 214B are positionally shifted toward the rear side of the vehicle body relative to the battery 204. Further, electrical connection ports each having a positive electrode and a negative electrode for power supply are provided at front portions of the battery 204. Thus, the first electrical connection port 213A is located at a front portion of the power distribution unit 213, while the second electrical connection port 213B, the third electrical connection port 213C, and the fourth electrical connection port 213D are located at rear portions of the power distribution unit 213. With this configuration, the power cables connected to the second electrical connection port 213B, the third electrical connection port 213C, and the fourth electrical connection port 213D extend linearly rearward around the power distribution unit 213 without detouring.

Note that the fifth electrical connection port 213E is located at a front portion of the power distribution unit 213, above the first electrical connection port 213A. The power cable connected to the fifth electrical connection port 213E is connected to the DC/DC converter 223 located on the right side of the battery 204. An intermediate portion of the power cable connected to the fifth electrical connection port 213E of the power distribution unit 213 and the DC/DC converter 223 is located between the cooling fan 229 and the battery 204 in the front-rear direction, and is located below the battery 204 and the cooling fan 229 in the up-down direction.

The fifth electrical connection port 213E is disposed at the front portion of the power distribution unit 213. This configuration makes the power distribution unit 213 compact in the up-down direction compared to a configuration in which the second electrical connection port 213B, the third electrical connection port 213C, the fourth electrical connection port 213D, and the fifth electrical connection port 213E are arranged in the up-down direction at rear portions of the power distribution unit 213.

Each of the inverters 214A and 214B includes a power receiving connection port 214C and a power supply connection port 214D. A power cable connected to the second electrical connection port 213B is connected to the power receiving connection port 214C of the inverter 214A. A power cable connected to the third electrical connection port 213C is connected to the power receiving connection port 214C of the inverter 214B. A power cable to the electric motor M1 is connected to the power supply connection port 214D of the inverter 214A. A power cable to the electric motor M2 is connected to the power supply connection port 214D of the inverter 214B.

The power receiving connection port 214C and the power supply connection port 214D are provided at rear edge portions of each of the inverters 214A and 214B. DC power is supplied from the second electrical connection port 213B to the power receiving connection port 214C of the inverter 214A via the power cable. AC power is supplied from the power supply connection port 214D of the inverter 214A to the electric motor M1 via the power cable. DC power is supplied from the third electrical connection port 213C to the power receiving connection port 214C of the inverter 214B via the power cable. AC power is supplied from the power supply connection port 214D of the inverter 214B to the electric motor M2 via the power cable.

The power receiving connection port 214C and the power supply connection port 214D are provided on the side opposite to the side where the loader attachment sections 208 are located. This prevents the front loader FA from coming into contact with power cables connected to the power receiving connection port 214C and the power supply connection port 214D when the front loader FA is attached to the loader attachment sections 208.

As shown in FIG. 17, the valve unit 228 is provided at a right side portion of the vehicle body 201, and the hydraulic piping 228H extends forward and upward from the valve unit 228. Further, hydraulic piping is provided on a right side portion of the front loader FA, and the hydraulic piping 228H and the hydraulic piping of the front loader FA are connected. A main body of the valve unit 228 and the hydraulic piping 228H are disposed on the right side of the battery 204, and the power distribution unit 213 is disposed on the left side of the battery 204. Accordingly, the hydraulic piping of the hydraulic system of the front loader FA and the power cables connected to the high-power devices such as the inverters 214A and 214B are distributed to the left and right with the battery 204 therebetween.

The power distribution unit 213 is configured to receive electric power from the battery 204 at a high voltage and distribute the electric power to the electric motors M1 and M2 and the like, and to receive charging electric power from the charging socket 236 and supply the charging electric power to the battery 204. For this reason, the power distribution unit 213 tends to generate heat. Therefore, the power distribution unit 213 is disposed at a position adjacent to the battery 204 and at a position where the power distribution unit 213 can be easily cooled.

Further, inclined wall portions 213f are provided at upper and lower front portions of a case of the power distribution unit 213. The upper inclined wall portion 213f is inclined upward toward the rear. The lower inclined wall portion 213f is inclined downward toward the rear. With this configuration, the width in the up-down direction of the front portion of the case of the power distribution unit 213 is formed to be smaller toward the front.

A first electrical connection port 213A and a fifth electrical connection port 213E are provided at front portions of the power distribution unit 213. A second electrical connection port 213B, a third electrical connection port 213C, and a fourth electrical connection port 213D are provided at rear portions of the power distribution unit 213. That is, the number of electrical connection ports provided at the front portions of the power distribution unit 213 is smaller than the number of electrical connection ports provided at the rear portions of the power distribution unit 213. With this configuration, the width in the up-down direction of the front portion of the case of the power distribution unit 213 is smaller than the width in the up-down direction of the rear portion of the case of the power distribution unit 213. This configuration enables a configuration in which the inclined wall portions 213f are provided at the upper and lower front portions of the case of the power distribution unit 213.

An upper end portion of the cooling fan 229 (an upper end portion of the rotation range) and an upper edge portion of the power distribution unit 213 are located at substantially the same position in the up-down direction. Further, a lower end portion of the cooling fan 229 (a lower end portion of the rotation range) and a lower edge portion of the power distribution unit 213 are located at substantially the same position in the up-down direction. That is, the cooling fan 229 generates cooling air directed rearward in a range extending from the upper edge portion to the lower edge portion of the power distribution unit 213. Accordingly, the power distribution unit 213 is cooled by the cooling air over the range from the upper edge portion to the lower edge portion thereof.

As described above, the battery radiator 225A, the high-voltage device radiator 226A, and the cooling fan 229 are disposed forward of the battery 204 and the power distribution unit 213, and the cooling fan 229 is configured to generate cooling air flowing rearward. That is, the cooling fan 229 is used for both cooling the battery radiator 225A and the high-voltage device radiator 226A (promotion of heat dissipation) and cooling the battery 204 and the power distribution unit 213 by the cooling air.

Further, the cooling air from the cooling fan 229 is efficiently divided by the upper and lower inclined wall portions 213f to flow to the upper edge portion and the lower edge portion of the power distribution unit 213.

The power distribution unit 213 is disposed adjacent to the fixed portion 212B in the left-right direction. As shown in FIG. 21, an inclined part of the inclined wall portion 213f is inclined along an inclined part of an upper edge of the fixed portion 212B in a side view of the vehicle body 201. Thus, the case of the power distribution unit 213 is located within a range of the outer periphery of the fixed portion 212B in a side view of the vehicle body 201. As a result, the power distribution unit 213 is firmly protected by the fixed portion 212B.

A porous mesh portion 212m is formed in the fixed portion 212B. The power distribution unit 213 is disposed adjacent to the mesh portion 212m. Thus, the cooling air generated by the cooling fan 229 flows from the front grill 212f (see FIG. 15) through the battery radiator 225A, the high-voltage device radiator 226A, the cooling fan 229, and the power distribution unit 213, and then flows to the left side of the vehicle body through the mesh portion 212m.

### [Variations of Second Embodiment]

Variations of the above embodiment will be described below. Matters other than those described in the following variations are the same as those described in the above embodiment.

### [Other Embodiments]

The present invention is not limited to the configurations illustrated in the above embodiment. Other representative embodiments of the present invention will be illustrated below.
(1) In the above embodiment, the electric motor M1 for travel and the electric motor M2 for work and hydraulic drive are configured as completely independent drive systems, but this embodiment is not limiting. For example, a clutch may be interposed between the travel power transmission mechanism 215A and the work power transmission mechanism 215B, and the electric motor M1 for travel may be capable of assisting the torque of the electric motor M2 for work. Further, the electric motor M2 for work may be capable of assisting the torque of the electric motor M1 for travel.
(2) In the above embodiment, the electric motor M2 is used for both work and hydraulic drive. This embodiment is not limiting, and the electric motor M2 may be used for either work or hydraulic drive.
(3) In the above embodiment, the battery 204 stores electric power for travel, work, and hydraulic drive. This embodiment is not limiting, and for example, the battery 204 supported by the front frame 202 may be configured to store electric power for at least one of travel, work, and hydraulic drive. In this case, a battery that stores electric power that does not correspond to the at least one of them may be disposed at another location in the electric tractor.
(4) The hydraulic drive device is not limited to the front loader FA. The hydraulic drive device may also be, for example, a container bucket, a pallet fork, a bale fork, a bale grab, a grader, a spreading device (sprayer, spreader), a soil sampling device, or the like.
(5) In the above embodiment, the hydraulic piping 228H is disposed on the right side of the battery 204, and the power distribution unit 213 is disposed on the left side of the battery 204. The hydraulic piping 228H may alternatively be disposed on the left side of the battery 204, and the power distribution unit 213 may alternatively be disposed on the right side of the battery 204. That is, the hydraulic piping 228H may be disposed on one of the left and right sides of the battery 204, and the power distribution unit 213 may be disposed on the other one of the left and right sides of the battery 204. Further, a main body of the valve unit 228 may be disposed on one of the left and right sides of the battery 204, and the hydraulic piping 228H may extend from the valve unit 228 so as to be located on the other one of the left and right sides of the battery 204.
(6) A configuration may be employed in which the inclined wall portions 213f are not provided at the upper lower front portions of the case of the power distribution unit 213. In this case, a configuration may also be employed in which the width in the up-down direction of the front portion of the case of the power distribution unit 213 does not decrease toward the front.
(7) A configuration may be employed in which the power distribution unit 213 does not include the fourth electrical connection port 213D. In this case, the charging socket 236 and the charging control unit 222 may be electrically connected to the battery 204 via a power cable of another charging system.
(8) The battery radiator 225A and the high-voltage device radiator 226A may be integrally configured.

Note that the configurations disclosed in the above embodiments (including other embodiments; the same applies below) can be applied in combination with configurations disclosed in the other embodiments, as long as no contradictions arise. The embodiments disclosed herein are examples. The embodiments of the present invention are not limited thereto, and can be modified as appropriate without departing from the purpose of the present invention.

### Industrial Applicability

The present invention can be applied to an electric tractor.

### Description of Reference Signs

### (First Embodiment)

- 1:: Front wheel (travel device)
- 2:: Rear wheel (travel device)
- 10:: First battery (battery)
- 11:: First motor (motor)
- 24:: Junction box
- 27:: Second battery
- 37:: Voltage converter
- 58:: Support frame
- A:: Electric tractor
- G:: Gap
- J1:: First cooling path
- J2:: Second cooling path
- N:: Electrical component
- S1:: First support
- S2:: Second support
- W:: Support mechanism

### (Second Embodiment)

- 201:: Vehicle body
- 204:: Battery
- 212:: Hood (cover member)
- 212A:: Pivotable portion
- 212B:: Fixed portion
- 212m:: Mesh portion
- 213:: Power distribution unit (distribution unit)
- 213A:: First electrical connection port
- 213B:: Second electrical connection port
- 213C:: Third electrical connection port
- 213D:: Fourth electrical connection port
- 225A:: Battery radiator (radiator)
- 226A:: High-voltage device radiator (radiator)
- 228H:: Hydraulic piping
- 229:: Cooling fan
- 236:: Charging socket
- M1:: Electric motor (first electric motor)
- M2:: Electric motor (second electric motor)

## Claims

1. An electric tractor comprising:
at least one battery;
a motor configured to perform driving with use of electric power supplied from the at least one battery;
a travel device configured to be driven by the motor; and
a support mechanism having a first support and a second support,
the first support supporting the at least one battery, and
the second support supporting an electrical component.

2. The electric tractor according to claim 1,
wherein the support mechanism has left and right support frames,
each of the support frames is disposed in an orientation extending along a side wall of the at least one battery, and
the at least one battery is disposed at a position sandwiched between the left and right support frames.

3. The electric tractor according to claim 1 or 2,
wherein the at least one battery includes a plurality of batteries, and
the first support supports the plurality of batteries.

4. The electric tractor according to claim 3, wherein the plurality of batteries are arranged next to each other in an up-down direction.

5. The electric tractor according to claim 3 or 4, wherein the plurality of batteries are spaced apart via a gap.

6. An electric tractor comprising:
at least one first battery;
a motor configured to perform driving with use of electric power supplied from the at least one first battery;
a travel device configured to be driven by the motor; and
a plurality of electrical components,
the plurality of electrical components being disposed in a distributed manner on left and right sides of the at least one first battery.

7. The electric tractor according to claim 6,
wherein the plurality of electrical components include: a second battery for an auxiliary device; a voltage converter configured to step down electric power from the at least one first battery and supply the electric power to the second battery; and a junction box, and
the voltage converter and the junction box are disposed in a distributed manner on the left and right sides of the at least one first battery.

8. The electric tractor according to claim 7,
wherein the at least one first battery includes two first batteries,
the two first batteries are arranged next to each other in an up-down direction, and
the voltage converter and the junction box are both disposed below a lower end position of the upper first battery.

9. The electric tractor according to claim 7 or 8, further comprising:
a first cooling path and a second cooling path in each of which a coolant is circulatable,
wherein the first cooling path and the second cooling path are independent of each other,
the voltage converter is included in the first cooling path,
the at least one first battery is included in the second cooling path,
at least a portion of the first cooling path passes through one of the left and right sides of the at least one first battery, and
at least a portion of the second cooling path passes through another one of the left and right sides of the at least one first battery.

10. The electric tractor according to any one of claims 6 to 9,
wherein the at least one first battery includes two first batteries,
the two first batteries are arranged next to each other in an up-down direction, and
the plurality of electrical components are disposed in a distributed manner above and below a lower end position of the upper first battery.

11. An electric tractor comprising:
a battery configured to store electric power;
a first electric motor for travel configured to perform driving in response to receiving supply of electric power from the battery,
a second electric motor for at least one of work and hydraulic drive configured to perform driving in response to receiving supply of electric power from the battery; and
a distribution unit configured to distribute electric power from the battery to the first electric motor and the second electric motor,
the distribution unit being disposed adjacent to a side surface portion of the battery, the side surface portion extending in an up-down direction.

12. The electric tractor according to claim 11, further comprising:
a cover member covering the battery, the cover member having a pivotable portion configured to pivot to enable opening and closing and a fixed portion fixed below the pivotable portion,
wherein the fixed portion has a porous mesh portion, and
the distribution unit is disposed adjacent to the mesh portion.

13. The electric tractor according to claim 11 or 12,
wherein the distribution unit includes: a first electrical connection port connecting a power cable on the battery side; a second electrical connection port connecting a power cable on the first electric motor side; and a third electrical connection port connecting a power cable on the second electric motor side,
the first electric motor and the second electric motor are positionally shifted toward a rear side of a vehicle body relative to the battery, and
the first electrical connection port is located at a front portion of the distribution unit, and the second electrical connection port and the third electrical connection port are located at rear portions of the distribution unit.

14. The electric tractor according to any one of claims 11 to 13, further comprising:
a charging socket configured to receive input electric power for charging the battery,
wherein the distribution unit includes a fourth electrical connection port connecting a power cable on the charging socket side.

15. The electric tractor according to any one of claims 11 to 14, further comprising:
a radiator configured to cool at least one of the battery, the first electric motor, and the second electric motor; and a cooling fan configured to generate cooling air,
wherein the radiator and the cooling fan are located forward of the battery and the distribution unit, and
the cooling fan is configured to generate the cooling air flowing rearward.

16. The electric tractor according to claim 15,
wherein the distribution unit has a case having a front portion with a width in the up-down direction that decreases as the front portion extends forward.

17. The electric tractor according to any one of claims 11 to 16, further comprising:
hydraulic piping connected to a hydraulic drive device configured to perform driving based on driving of the second electric motor,
wherein the hydraulic piping is disposed on one of left and right sides of the battery, and
the distribution unit is disposed on another one of the left and right sides of the battery.
